# EUROPEAN PATENT APPLICATION

(11) **EP 4 621 105 A1**
(43) Date of publication of application: **24.09.2025**
(21) Application number: 23891456.8
(22) Date of filing: 09.11.2023
(51) Int. Cl.: C25B 13/02, C25B 1/04, C25B 9/00, C25B 13/04, C25B 13/08, F16J 15/10, F16J 15/12, H01M 8/0247, H01M 8/0273, H01M 8/0276, H01M 8/028, H01M 8/0284, H01M 8/10

(54) **GASKET AND GASKET DEVICE**

(30) Priority: 15.11.2022 JP 2022182540; 06.09.2023 JP 2023144894
(71) Applicant: NOK Corporation, Minato-ku Tokyo 105-8585 (JP)
(72) Inventor: KAWAI, Tomohiro, Fujisawa-shi, Kanagawa 251-0042 (JP); YUI, Hajime, Fujisawa-shi, Kanagawa 251-0042 (JP)
(74) Representative: Global IP Europe Patentanwaltskanzlei
(86) International application number: PCT/JP2023/040433
(87) International publication number: WO 2024/106305

(57) **Abstract**

A gasket device (30) includes: a first gasket (40) made of an elastic body; and a separator (32) having a pair of surfaces (32a, 32b) facing away from each other. The first gasket (40) is in an annular shape and attached to the surface (32a) of the separator (32) in such a manner as to surround an opening (40a). Moreover, the first gasket (40) includes an annularly extending lip (45) projecting in a direction that the surface (32a) of the separator (32) faces. The lip (45) has different heights on a side of the opening (40a) and an opposite side to the side of the opening (40a).

## Description

### [Technical Field]

The present invention relates to a gasket and a gasket device for use in a water electrolysis device or a fuel battery.

### [Background Art]

In a water electrolysis device that generates hydrogen from water, a gasket is used for ensuring sealing of the inside. The gasket is sandwiched between a separator and a polymer electrolyte membrane layer (Patent Literatures 1 to 3).

In a fuel battery that generates electricity by a reaction of oxygen and hydrogen, a gasket is also used for ensuring sealing of the inside. The gasket is sandwiched between a separator and a polymer electrolyte membrane layer.

### [Citation List]

### [Patent Literature]

Patent Literature 1: Japanese Patent Application Publication No. 2007-131954
Patent Literature 2: Japanese Patent Application Publication No. 2012-117140
Patent Literature 3: Japanese Patent Application Publication No. 2013-197079

### [Summary of the Invention]

### [Technical Problem]

**In** a water electrolysis device and a fuel battery, a pressure in an inner space is to be increased. Moreover, in recent years, a higher pressure of the gas supplied to the inner space has been required. When the pressure in the inner space, which is a space to be sealed, becomes high, there are cases where a gasket is deformed to lower a seal performance. Accordingly, there has been a demand for the gasket for the fuel battery and the hydrogen generation device to have a configuration enabling the seal performance to be maintained even though the pressure in the inner space becomes high.

The present invention is made in view of the above problem and an object thereof is to provide a gasket and a gasket device capable of exhibiting a high sealing function even though a pressure in an inner space of a water electrolysis device or a fuel battery is increased.

### [Solution to Problem]

A gasket according to the present invention is a gasket for sealing a space between opposed members in a water electrolysis device or a fuel battery, the gasket being made of an elastic body, the gasket being in an annular shape, the gasket being configured to be attached to one of a pair of surfaces of a separator in such a manner as to surround the space, the pair of surfaces facing away from each other, the gasket including an annularly extending lip, in which the lip is configured to project in a direction that the one of the pair of surfaces of the separator faces, and the lip has different heights on a side of the space and an opposite side to the side of the space.

In a gasket according to an aspect of the present invention, the height of the lip on the side of the space is higher than the height of the lip on the opposite side to the space.

In a gasket according to an aspect of the present invention, the gasket has an inner surface that is an annular surface connected to the lip on the side of the space and an outer surface that is an annular surface connected to the lip on the opposite side to the space, the height of the lip on the side of the space is a distance in a direction for the lip to project between a distal end of the lip and the inner surface, and the height of the lip on the opposite side to the space is a distance in the direction for the lip to project between the distal end of the lip and the outer surface.

In a gasket according to an aspect of the present invention, the inner surface and the outer surface are configured to extend along the one of the pair of surfaces of the separator.

A gasket device according to the present invention is a gasket device for sealing a space between opposed members in a water electrolysis device or a fuel battery, the gasket device including: a gasket made of an elastic body; and a separator having a pair of surfaces facing away from each other, in which the gasket is in an annular shape and attached to one of the pair of surfaces of the separator in such a manner as to surround the space and includes an annularly extending lip projecting in a direction that the one of the pair of surfaces of the separator faces, and the lip has different heights on a side of the space and an opposite side to the side of the space.

In a gasket device according to an aspect of the present invention, the height of the lip on the side of the space is higher than the height of the lip on the opposite side to the space.

In a gasket device according to an aspect of the invention, the gasket has an inner surface that is an annular surface connected to the lip on the side of the space and an outer surface that is an annular surface connected to the lip on the opposite side to the space, the height of the lip on the side of the space is a distance in a direction for the lip to project between a distal end of the lip and the inner surface, and the height of the lip on the opposite side to the space is a distance in the direction for the lip to project between the distal end of the lip and the outer surface.

In a gasket device according to an aspect of the invention, the inner surface and the outer surface extend along the one of the pair of surfaces of the separator.

In a gasket device according to an aspect of the invention, the separator includes at least one annularly extending recessed portion, the recessed portion is recessed toward the one or the other one of the pair of surfaces, and the gasket is attached to a portion of the separator, the portion including the recessed portion.

A gasket device according to an aspect of the present invention includes another gasket made of an elastic body, in which the other gasket is in an annular shape and is attached to the other one of the pair of surfaces of the separator to face away from the gasket in such a manner as to surround the space.

In a gasket device according to an aspect of the invention, the other gasket includes an annularly extending lip projecting in a direction that the other one of the pair of surfaces of the separator faces, and the lip of the other gasket has different heights on the side of the space and the opposite side to the side of the space.

In a gasket device according to an aspect of the invention, the height of the lip of the other gasket on the side of the space is higher than the height of the lip of the other gasket on the opposite side to the space.

In a gasket device according to an aspect of the invention, the other gasket has an inner surface that is an annular surface connected to the lip of the other gasket on the side of the space and an outer surface that is an annular surface connected to the lip of the other gasket on the opposite side to the space, the height of the lip of the other gasket on the side of the space is a distance in a direction for the lip of the other gasket to project between a distal end of the lip of the other gasket and the inner surface of the other gasket, and the height of the lip of the other gasket on the opposite side to the space is a distance in the direction for the lip of the other gasket to project between the distal end of the lip of the other gasket and the outer surface of the other gasket.

In a gasket device according to an aspect of the invention, the inner surface of the other gasket and the outer surface of the other gasket extend along the other one of the pair of surfaces of the separator.

In a gasket device according to an aspect of the invention, the other gasket has a surface annularly extending along the other one of the pair of surfaces of the separator.

In a gasket device according to an aspect of the invention, the separator includes a stepped portion forming a step on a side that the one of the pair of surfaces faces, the stepped portion annularly extends, and the gasket is in contact with the step at a portion opposite to the space with respect to the lip.

In a gasket device according to an aspect of the invention, the separator has an annular groove recessed toward the other one of the pair of surfaces, and the gasket is provided within the groove.

### [Advantageous Effects of the Invention]

A gasket and a gasket device according to the present invention are capable of exhibiting a high sealing function even though a pressure in an inner space of a water electrolysis device or a fuel battery is increased.

### [Brief Description of the Drawings]

[Fig. 1] Fig. 1 is a schematic diagram illustrating a hydrogen generation plant in which a gasket device according to a first embodiment of the present invention is used.
[Fig. 2] Fig. 2 is a schematic cross-sectional view illustrating a water electrolysis device in which the gasket device according to the first embodiment of the present invention is used.
[Fig. 3] Fig. 3 is a top view of Fig. 2.
[Fig. 4] Fig. 4 is a cross-sectional view illustrating the gasket device according to the first embodiment of the present invention.
[Fig. 5] Fig. 5 is an exploded cross-sectional view of the gasket device in Fig. 4.
[Fig. 6] Fig. 6 is a fracturing perspective view illustrating a part of a separator of the gasket device.
[Fig. 7] Fig. 7 is a cross-sectional view illustrating a state in which a plurality of gasket devices in Fig. 4 are arranged side by side.
[Fig. 8] Fig. 8 is a cross-sectional view illustrating a state in which the plurality of gasket devices in Fig. 7 are compressed.
[Fig. 9] Fig. 9 is a cross-sectional view illustrating a state in which the plurality of gasket devices in Fig. 7 are further compressed.
[Fig. 10] Fig. 10 is a cross-sectional view illustrating another state in which the plurality of gasket devices according to the first embodiment of the present invention are arranged side by side.
[Fig. 11] Fig. 11 is a cross-sectional view of a gasket device according to a modification example of the first embodiment of the present invention.
[Fig. 12] Fig. 12 is an exploded cross-sectional view of the gasket device in Fig. 11.
[Fig. 13] Fig. 13 is a cross-sectional view illustrating a state in which a plurality of gasket devices in Fig. 11 are arranged side by side.
[Fig. 14] Fig. 14 is a cross-sectional view illustrating a state in which the plurality of gasket devices in Fig. 13 are compressed.
[Fig. 15] Fig. 15 is a cross-sectional view illustrating a gasket device according to a second embodiment of the present invention.
[Fig. 16] Fig. 16 is a cross-sectional view for explaining the gasket device in Fig. 15 in a use state.
[Fig. 17] Fig. 17 is a cross-sectional view illustrating a modification example of the gasket device according to the second embodiment of the present invention.
[Fig. 18] Fig. 18 is a cross-sectional view for explaining the gasket device in Fig. 17 in a use state.
[Fig. 19] Fig. 19 is a cross-sectional view illustrating a gasket device according to a third embodiment of the present invention.
[Fig. 20] Fig. 20 is a cross-sectional view for explaining the gasket device in Fig. 19 in a use state.
[Fig. 21] Fig. 21 is a cross-sectional view illustrating a modification example of the gasket device according to the third embodiment of the present invention.
[Fig. 22] Fig. 22 is a cross-sectional view for explaining the gasket device in Fig. 21 in a use state.
[Fig. 23] Fig. 23 is a schematic cross-sectional view illustrating a fuel battery in which the gasket device in Fig. 11 is used.
[Fig. 24] Fig. 24 is a cross-sectional view illustrating a state in which a plurality of gasket devices are arranged side by side in the fuel battery.
[Fig. 25] Fig. 25 is a cross-sectional view illustrating the gasket device in a use state in the fuel battery.
[Fig. 26] Fig. 26 illustrates a modification example of a polymer electrolyte membrane layer usable in an embodiment of the present invention.

### [Description of Embodiments]

The following describes various embodiments according to the present invention with reference to the attached drawings. The scale of the drawings is not necessarily accurate and some features may be exaggerated or omitted.

### First Embodiment

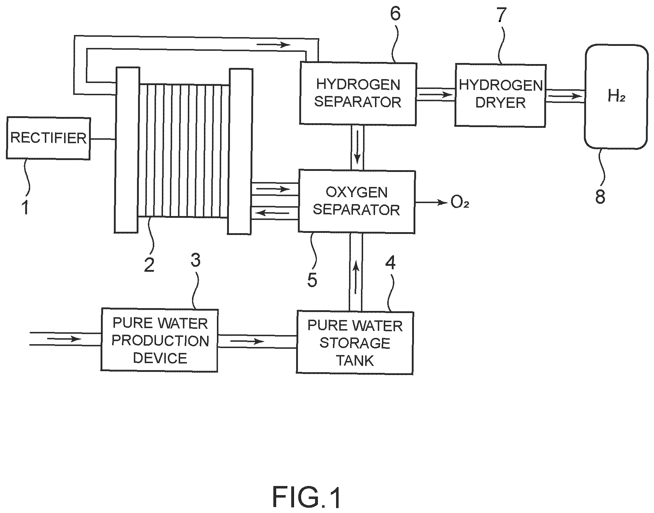

As illustrated in Fig. 1, a hydrogen generation plant in which a gasket device according to a first embodiment of the present invention is used includes a rectifier 1, a water electrolysis device 2, a pure water production device 3, a pure water storage tank 4, an oxygen separator (an oxygen separator) 5, a hydrogen separator (a hydrogen separator) 6, and a hydrogen dryer (a hydrogen dryer) 7, and a hydrogen storage cylinder 8. In Figure 1, the illustration of a pump that generates a water flow and a valve that regulates the water flow is omitted.

The rectifier 1 converts an alternating current to a direct current and supplies the direct current to the water electrolysis device 2.

The pure water production device 3 produces pure water by removing impurities from tap water and supplies the pure water to the pure water storage tank 4. The pure water storage tank 4 stores the pure water.

The pure water stored in the pure water storage tank 4 is to be supplied to the water electrolysis device 2 via the oxygen separator 5. The water electrolysis device 2 electrolyzes the pure water to generate hydrogen gas and oxygen gas. The pure water containing the oxygen gas is to be supplied to the oxygen separator 5 from the water electrolysis device 2 and the oxygen separator 5 separates the pure water and the oxygen gas and releases the oxygen gas. The pure water from which the oxygen gas has been separated through the oxygen separator 5 is to be supplied again to the water electrolysis device 2.

The pure water containing the hydrogen gas is to be supplied to the hydrogen separator 6 from the water electrolysis device 2, and the hydrogen separator 6 separates the pure water and the hydrogen gas and supplies the hydrogen gas to the hydrogen dryer 7. The hydrogen dryer 7 removes moisture from the hydrogen gas and supplies the hydrogen gas to the hydrogen storage cylinder 8. The pure water from which the hydrogen gas has been separated by the hydrogen separator 6 is to be supplied to the oxygen separator 5 and again supplied to the water electrolysis device 2.

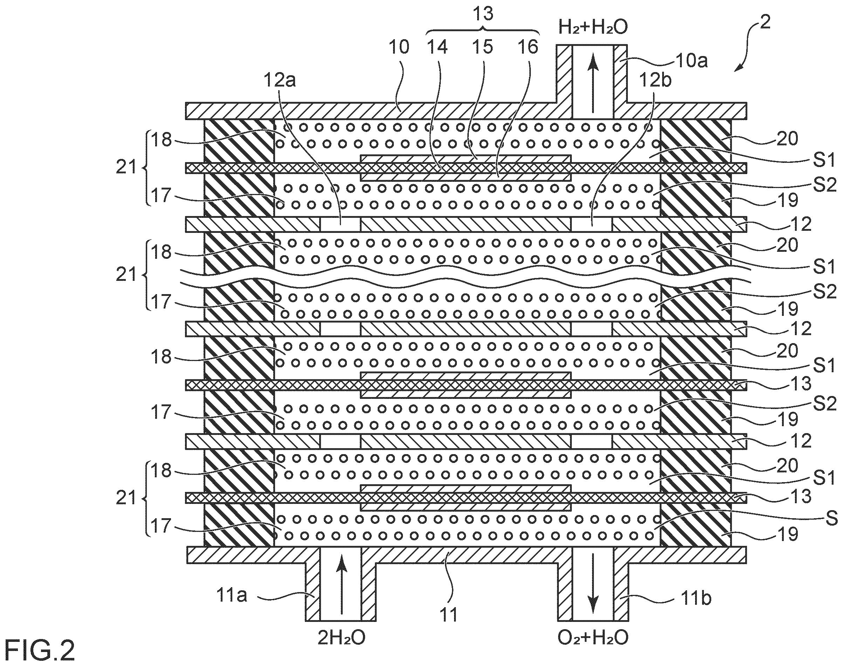

Fig. 2 is a cross-sectional view illustrating an overall of the water electrolysis device 2. The water electrolysis device 2 includes end walls 10, 11, a plurality of separators 12, a plurality of polymer electrolyte membrane layers 13, a plurality of anode current collectors 17, a plurality of cathode current collectors 18, and gaskets 19, 20.

The end walls 10, 11 are flat metal plates disposed in parallel with each other. The end wall 10 is used as a cathode and the end wall 11 is used as an anode. The end wall 11 is provided with a tubular path 11a for introducing the pure water into the water electrolysis device 2 and a tubular path 11b for deriving the pure water containing the oxygen gas from the water electrolysis device 2. The end wall 10 is provided with a tubular path 10a for deriving the pure water containing the hydrogen gas from the water electrolysis device 2.

The plurality of separators 12 are disposed between the end walls 10, 11. The separators 12 are flat metal plates and disposed in parallel with each other at a regular interval. The separators 12 are also to be used as electrodes. Specifically, the water electrolysis device 2 employes a bipolar cell system, in which a surface on an end wall 10 side of each of the separators 12 is to be used as a cathode and a surface on an end wall 11 side thereof is to be as an anode.

A single electrolysis cell 21, into which the pure water is to be introduced, is formed between the end wall 10 and the separator 12 adjacent to the end wall 10. The polymer electrolyte membrane layer 13 is disposed between the end wall 10 and the separator 12 adjacent to the end wall 10. The polymer electrolyte membrane layer 13 includes a polymer electrolyte membrane (a polymer electrolyte membrane) 14 and catalytic membranes 15, 16 stuck to respective opposite surfaces of the polymer electrolyte membrane 14. H⁺ generated by electrolysis of the pure water moves toward the cathode through the polymer electrolyte membrane layer 13 and, at this time, changes into a hydrogen gas (H₂) by reduction reaction.

The single electrolysis cell 21, into which the pure water is to be introduced, is also formed between adjacent two of the separators 12. The polymer electrolyte membrane layer 13 is also disposed between the adjacent two of the separators 12.

A space between the end wall 11 and the separator 12 adjacent to the end wall 11 also forms the single electrolysis cell 21, into which the pure water is to be introduced. The polymer electrolyte membrane layer 13 is also disposed between the end wall 11 and the separator 12 adjacent to the end wall 11.

As such, the separators 12 function as partitions partitioning the electrolysis cells 21. As partitioning the electrolysis cells 21, the end walls 10, 11 can also be referred to as separator. The separators 12 are formed with through holes 12a, 12b and the through holes 12a, 12b connect adjacent ones of the electrolysis cells 21.

The anode current collector 17 is disposed between the anode and the polymer electrolyte membrane layer 13 and the cathode current collector 18 is disposed between the cathode and the polymer electrolyte membrane layer 13. The current collectors 17, 18 are made of a porous material. The current collectors 17, 18 are immersed with the pure water.

An elastomeric gasket 20 is sandwiched between the end wall (the separator) 10 and the polymer electrolyte membrane layer 13 adjacent to the end wall 10. The gasket 20 surrounds the entire circumference of the cathode current collector 18. The gasket 20 is compressed by the end wall 10 and the polymer electrolyte membrane layer 13.

An elastomeric gasket 19 is sandwiched between the separator 12 and the polymer electrolyte membrane layer 13 above adjacent to the separator 12 in the figure. The gasket 19 surrounds the entire circumference of the anode current collector 17. The gasket 19 is compressed by the separator 12 and the polymer electrolyte membrane layer 13.

The elastomeric gasket 20 is sandwiched between the separator 12 and the polymer electrolyte membrane layer 13 below adjacent to the separator 12 in the figure. The gasket 20 surrounds the entire circumference the cathode current collector 18. The gasket 20 is compressed by the separator 12 and the polymer electrolyte membrane layer 13.

The elastomeric gasket 19 is sandwiched between the end wall (the separator) 11 and the polymer electrolyte membrane layer 13 adjacent to the end wall 11. The gasket 19 surrounds the entire circumference of the anode current collector 17. The gasket 19 is compressed by the end wall 11 and the polymer electrolyte membrane layer 13.

In Fig. 2, the catalytic membranes 15, 16 are disposed in each of the polymer electrolyte membrane layers 13 at a middle of the polymer electrolyte membrane 14 and, within each of the polymer electrolyte membrane layers 13, only the polymer electrolyte membrane 14 is sandwiched between adjacent ones of the gaskets 19, 20. Incidentally, the catalytic membranes 15, 16 may be disposed all over a front surface and a back surface of the polymer electrolyte membrane 14 and the polymer electrolyte membrane 14 and the catalytic membranes 15, 16 may be sandwiched between adjacent ones of the gaskets 19, 20. In other words, the gaskets 19, 20 may each be brought into contact with only the polymer electrolyte membrane 14 or may be brought into contact with the polymer electrolyte membrane layer 13 including the polymer electrolyte membrane 14 and the catalytic membranes 15, 16.

The water electrolysis device 2 in Fig. 2 is integrated by a clamping device or a bolt and a nut so that the individual elements are not separated.

In using the water electrolysis device 2, a pressure in an inner space of the water electrolysis device 2 is increased in order to accelerate the supply of the hydrogen gas to the hydrogen storage cylinder 8. Preferably, a pressure in a cathode space S1, which is a cathode-side space of each of the electrolysis cells 21, is increased more than a pressure in an anode space S2, which is an anodeside space thereof. It should be noted that the cathode space S1 is a space in which the cathode current collector 18 is disposed and the anode space S2 is a space in which the anode current collector 17 is disposed.

An up-down direction in Fig. 2 does not necessarily correspond to a use state of the water electrolysis device 2. The water electrolysis device 2 is normally used with the end walls 10, 11, the separators 12, and the polymer electrolyte membrane layers 13 being in an upright state.

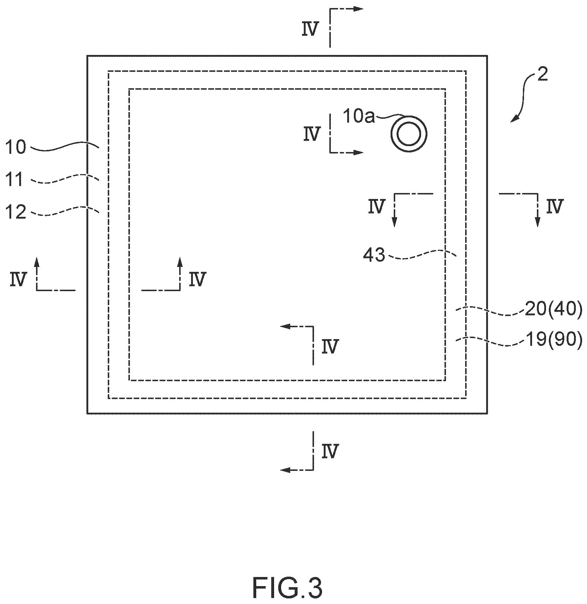

Fig. 3, which is a top view of Fig. 2, may be considered as a side view of the water electrolysis device 2 in consideration of the normal use state. As illustrated in Fig. 3, the gaskets 19, 20 are in a ring-shaped rectangle, surrounding the entire circumference of a space in which the pure water is placed.

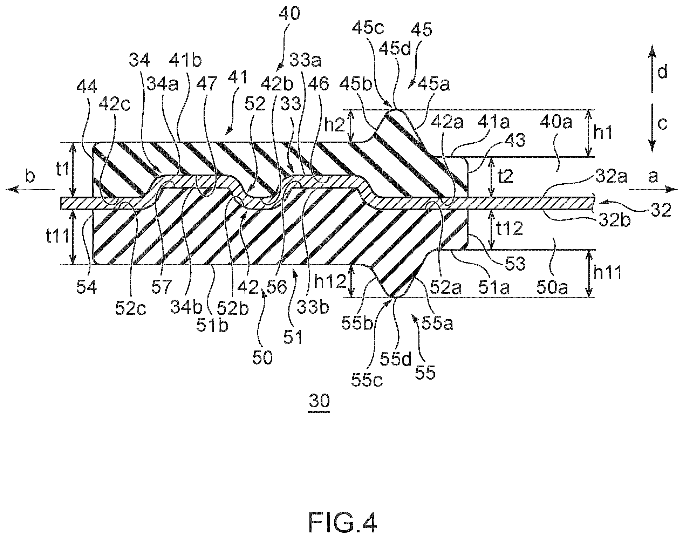

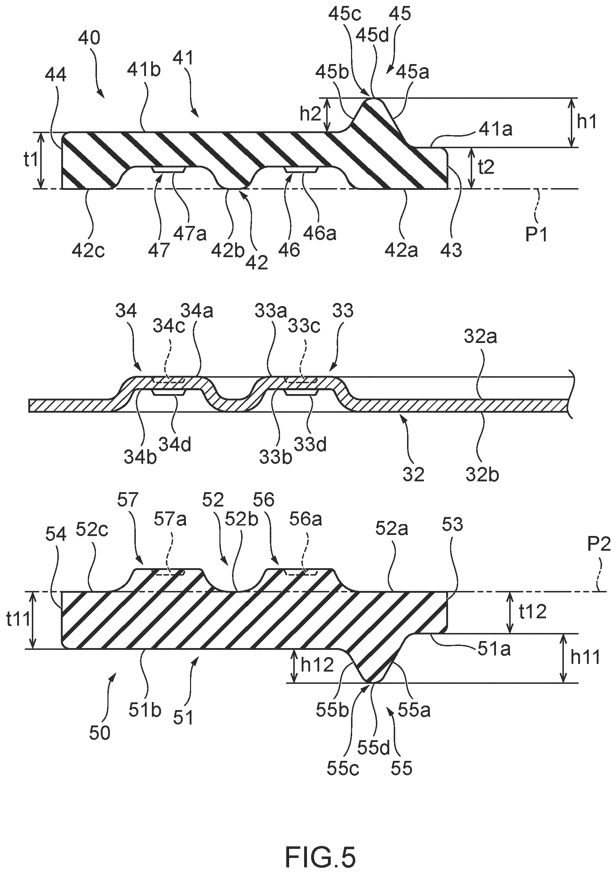

Fig. 4 is a cross-sectional view of a gasket device 30 according to the first embodiment of the present invention. Specifically, Fig. 4 corresponds to a cross section along a line IV-IV in Fig. 3. Incidentally, although a lip 45 of a gasket 40 (20) and a lip 55 of a gasket 50 (19) are compressed in a thickness direction of the gasket device 30 when the gasket device 30 is in use, Fig. 4 illustrates a state in which neither of the gaskets 40, 50 is compressed. Fig. 5 is an exploded cross-sectional view of the gasket device 30. Fig. 5 also illustrates the state in which neither of the gaskets 40, 50 is compressed.

As illustrated in Figs. 4 and 5, the gasket device 30 according to the present embodiment includes a first gasket 40 according to the first embodiment of the present invention and that is made of an elastic body and a separator 32 having a pair of surfaces 32a, 32b facing away from each other. The first gasket 40 is in an annular shape and is attached to one (the surface 32a) of the pair of surfaces of the separator 32 in such a manner as to surround a space (an opening 40a). The first gasket 40 also includes the annularly extending lip 45 projecting in a direction that the surface 32a of the separator 32 is faces. The lip 45 has different heights on a side of the opening 40a and the opposite side to the side of the opening 40a.

As illustrated in Figs. 4 and 5, the gasket device 30 according to the present embodiment includes a second gasket 50, which is another gasket, according to the first embodiment of the present invention and that is formed of an elastic body in addition to the first gasket 40. The second gasket 50 is in an annular shape and is attached to the other one (the surface 32b) of the pair of surfaces of the separator 32 to face away from the gasket 40 in such a manner as to surround a space (an opening 50a). The gasket 50 includes the annularly extending lip 55 projecting in a direction that the surface 32b of the separator 32 faces. The lip 55 of the gasket 50 has different heights on a side of the opening 50a and the opposite side to the side of the opening 50a.

A specific description will be made below on configurations of the first gasket 40, the second gasket 50, and the gasket device 30 according to the present embodiment.

As illustrated in Figs. 4 and 5, in the first gasket 40, a height (an inner height h1) on the side of the opening 40a of the lip 45 is higher than a height (an outer height h2) on the opposite side to the opening 40a of the lip 45. Moreover, as illustrated in Figs. 4 and 5, in the second gasket 50, a height (an inner height h11) on the side of the opening 50a of the lip 55 is higher than a height (an outer height h12) on the opposite side to the opening 50a of the lip 55. It should be noted that the side of the opening 40a is a side indicated by an arrow-a direction illustrated in Fig. 4 and also a side to approach the opening 40a in a direction in which the opening 40a stretches. It should be noted that the direction in which the opening 40a stretches is a direction along a plane of paper of Fig. 3. The opposite side to the opening 40a is a side indicated by an arrow-b direction in Fig. 4 and also a side away from the opening 40a in the direction in which the opening 40a stretches. Moreover, the side of the opening 50a is a side indicated by the arrow-a direction illustrated in Fig. 4 and also a side to approach the opening 50a in a direction in which the opening 50a stretches. It should be noted that the direction in which the opening 50a stretches is a direction along the plane of paper of Fig. 3. The opposite side to the opening 50a is a side indicated by the arrow-b direction in Fig. 4 and also a side away from the opening 50a in the direction in which the opening 50a stretches. The side of the opening 40a and the side of the opening 50a are an inner side in the electrolysis cell 21 and also referred to as "inner side" hereinbelow. Moreover, the opposite side to the opening 40a and the opposite side to the opening 50a are an outer side in the electrolysis cell 21 and also referred to as "outer side" hereinbelow.

As described above, the gasket device 30 includes the separator 32, the first gasket 40, and the second gasket 50. The first gasket 40 is fixed to one of the surfaces (the surface 32a) of the separator 32 and the second gasket 50 is fixed to the other surface (the surface 32b) of the separator 32. The first gasket 40 corresponds to the gasket 20 in Fig. 2 and the second gasket 50 corresponds to the gasket 19 in Fig. 2. Thus, an upper side and a lower side in Fig. 4 are opposite to an upper side and a lower side in Fig. 2.

The separator 32 corresponds to any one of the above-described end walls 10, 11 and the separator 12. Although the end wall 10 is not brought into contact with the gasket 19 in Fig. 2, the gaskets 40, 50 (20, 19) may be fixed to opposite surfaces of the end wall 10 (the separator 32) as illustrated in Fig. 4. Moreover, although the end wall 11 is not brought into contact with the gasket 20 in Fig. 2, the gaskets 40, 50 (20, 19) may be fixed to opposite surfaces of the end wall 11 (the separator 32) as illustrated in Fig. 4.

The elastic body forming the gaskets 40, 50 is, for example, elastomer. Examples of the elastomer include silicone rubber, EPDM (ethylene propylene diene monomer) rubber, and fluorine rubber. The main material of the separator 32 is a metal, for example, stainless steel, titanium, or titanium alloy.

As illustrated in Fig. 4 and Fig. 5, the first gasket 40 has a first side surface 41, a second side surface 42, an inner end surface 43, and an outer end surface 44 and is shaped by the first side surface 41, the second side surface 42, the inner end surface 43, and the outer end surface 44. The first side surface 41 is an annular surface facing the polymer electrolyte membrane layer 13 in the electrolysis cell 21 (see Fig. 2), and in the gasket device 30, the first side surface 41 faces in the direction that the surface 32a of the separator 32 faces. The second side surface 42 is an annular surface facing the surface 32a of the separator 32 and is fixed to the surface 32a of the separator 32. The inner end surface 43 is an annular surface facing the inner side and defines the opening 40a. The opening 40a is, within the electrolysis cell 21, a space in which the cathode current collector 18 is disposed and is also a part of the electrolysis cell 21 (see Fig. 2). The outer end surface 44 is on the opposite side to the inner end surface 43 and is an annular surface facing the outer side, being exposed on the outside of the electrolysis cell 21.

Two grooves (recessed portions) 46, 47 are formed in the second side surface 42. The grooves 46, 47 are grooves that receive raised portions formed on the separator 32 described later. The grooves 46, 47, for example, annularly extend along an extending direction of the gasket 40.

The second side surface 42 is divided by the two grooves 46, 47 and has three annularly extending contact surfaces 42a, 42b, 42c. As illustrated in, for example, Fig. 5, the three contact surfaces 42a, 42b, 42c extend along a reference plane P1, which is an imaginary plane, and specifically, for example, extend on the reference plane P1 or substantially on the reference plane P1.

Moreover, as illustrated in, for example, Fig. 4 and Fig. 5, the first gasket 40 has an inner surface 41a, which is an annular surface connected to the lip 45 on the inner side, and an outer surface 41b, which is an annular surface connected to the lip 45 on the outer side. The lip 45 and the inner surface 41a define the opening 40a in combination with the inner end surface 43. The lip 45 extends along an extending direction of the first side surface 41 and annularly extends. The lip 45 also projects in a direction perpendicular to the reference plane P1 (arrow-c and -d directions illustrated in Fig. 4 and also referred to as "compressing direction" hereinbelow). As illustrated in Figs. 4 and 5, the lip 45 is, for example, substantially in a triangular shape or substantially in a trapezoidal shape in cross section and the lip 45 has an inner inclined surface 45a, an outer inclined surface 45b, and a distal end surface 45c. In the cross section, the inner inclined surface 45a and the outer inclined surface 45b form, for example, straight lines or substantially straight lines inclined to each other and the distal end surface 45c forms, for example, a circular arc or an arc smoothly connecting the inner inclined surface 45a and the outer inclined surface 45b. The lip 45 has a distal end 45d, which is an end in the compressing direction, in the distal end surface 45c.

The inner surface 41a extends along the lip 45 on the inner side of the lip 45, being continuous with the lip 45 at an outer end and continuous with the inner end surface 43 at an inner end. Moreover, the outer surface 41b extends along the lip 45 on the outer side of the lip 45, being continuous with the lip 45 at an inner end and continuous with the outer end surface 44 at an outer end. The inner surface 41a extends along a plane and is, for example, parallel or substantially parallel with the contact surfaces 42a, 42b, 42c. Moreover, the outer surface 41b extends along a plane and is, for example, parallel or substantially parallel with the contact surfaces 42a, 42b, 42c. Moreover, as illustrated in, for example, Figs. 4 and 5, the inner surface 41a faces away from the contact surface 42a and the outer surface 41b faces away from the contact surface 42b, 42c in the compressing direction.

As described above, the height on the inner side (an inner height h1) of the lip 45 is higher than the height on the outer side (an outer height h2) of the lip 45 (the inner height h1 > the outer height h2). The inner height h1 of the lip 45 is a distance in the compressing direction between the distal end 45d of the lip 45 and the inner surface 41a as illustrated in, for example, Figs. 4 and 5. The outer height h2 of the lip 45 is a distance in the compressing direction between the distal end 45d of the lip 45 and the outer surface 41b as illustrated in, for example, Figs. 4 and 5. In other words, a thickness (a thickness t1) at the outer surface 41b of the gasket 40 is different from a thickness (a thickness t2) at the inner surface 41a of the gasket 40 as illustrated in Figs. 4 and 5. Specifically, the thickness t1 of the gasket 40 is larger than the thickness t2 of the gasket 40. It should be noted that the thickness t1 of the gasket 40 is a distance in the compressing direction between the contact surfaces 42b, 42c and the outer surface 41b and the thickness t2 of the gasket 40 is a distance in the compressing direction between the contact surface 42a and the inner surface 41a. Thus, in the gasket device 30, t1 donates a height of the outer surface 41b from the separator 32 and t2 donates a height of the inner surface 41a from the separator 32, and the inner surface 41a is lower with respect to the separator 32 than the outer surface 41b as illustrated in Fig. 4.

As described above, the first gasket 40 is fixed to the surface 32a of the separator 32 at the second side surface 42. A peripheral portion of the separator 32 to which the gaskets 40, 50 are fixed are formed with a single or a plurality of annularly extending raised portions. The separator 32 is formed with two raised portions 33, 34 as illustrated in, for example, Figs. 4 and 5. The raised portions 33, 34 project from, for example, the surface 32a, forming raised surfaces 33a, 34a in the surface 32a. Meanwhile, for example, the raised portions 33, 34 form, in the surface 32b, recessed surfaces 33b, 34b recessed toward the surface 32a, correspondingly. As such, the raised portions 33, 34 are also portions forming the recessed portions in the surface 32b of the separator 32.

As illustrated in Fig. 4, the raised portions 33, 34 of the separator 32 are in shapes corresponding to the grooves 46, 47 of the first gasket 40 and are configured to be fitted in the grooves 46, 47 of the first gasket 40, respectively. Moreover, the raised surfaces 33a, 34a of the raised portions 33, 34 of the separator 32 are configured to come into contact with the grooves 46, 47 of the gasket 40, respectively. Moreover, when the raised portions 33, 34 of the separator 32 are fitted in the grooves 46, 47 of the gasket 40, respectively, the contact surfaces 42a, 42b, 42c of the gasket 40 are configured to come into contact with respective corresponding portions of the surface 32a of the separator 32.

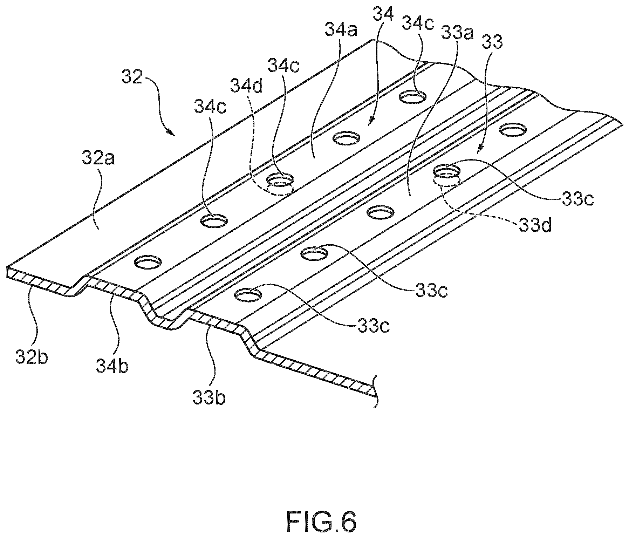

As illustrated in, for example, Fig. 5 and Fig. 6, each of the raised portions 33, 34 of the separator 32 is formed with, on a surface 32a side, a number of recessed portions (dimples) 33c, 34c at a space and, on a surface 32b side, a number of raised portions 33d, 34d at a space, correspondingly. The recessed portions 33c, 34c (the raised portions 33d, 34d) are disposed, for example, at a regular interval.

In contrast, as illustrated in Fig. 5, a number of protrusions 46a, 47a are formed inside the grooves 46, 47 of the first gasket 40, respectively. The protrusions 46a, 47a are shaped to be fitted in the recessed portions 33c, 34c formed in the raised portions 33, 34 of the separator 32, respectively.

Next, description will be made on the second gasket 50. Although having a similar form to the first gasket 40, the second gasket 50 differs in the shape of the second side surface 42 of the first gasket 40 in accordance with a shape on the surface 32b side of the separator 32.

As illustrated in Fig. 4 and Fig. 5, the second gasket 50 has a first side surface 51, a second side surface 52, an inner end surface 53, and an outer end surface 54 and is shaped by the first side surface 51, the second side surface 52, the inner end surface 53, and the outer end surface 54. The first side surface 51 is an annular surface facing the polymer electrolyte membrane layer 13 in the electrolysis cell 21 (see Fig. 2), and in the gasket device 30, the first side surface 51 faces in the direction that the surface 32b of the separator 32 faces. The second side surface 52 is an annular surface facing the surface 32b of the separator 32 and is fixed to the surface 32b of the separator 32. The inner end surface 53 is an annular surface facing the inner side and defines the opening 50a. The opening 50a is a space in which the anode current collector 17 is disposed and is also a part of the electrolysis cell 21 (see Fig. 2). The outer end surface 54 is on the opposite side to the inner end surface 53 and is an annular surface facing the outer side, being exposed on the outside of the electrolysis cell 21.

The second side surface 52 is formed with two raised portions 56, 57. The raised portions 56, 57 are portions to be received in the recessed surfaces 33b, 34b of the raised portions 33, 34 formed on the separator 32. The raised portions 56, 57 annularly extend along, for example, an extending direction of the gasket 50.

The second side surface 52 is divided by the two raised portions 56, 57 and has three annularly extending contact surfaces 52a, 52b, 52c. As illustrated in, for example, Fig. 5, the three contact surfaces 52a, 52b, 52c extend along a reference plane P2, which is an imaginary plane, and specifically, for example, extend on the reference plane P2 or substantially on the reference plane P2.

Moreover, as illustrated in, for example, Fig. 4 and Fig. 5, the second gasket 50 has an inner surface 51a, which is an annular surface connected to the lip 55 on the inner side, and an outer surface 51b, which is an annular surface connected to the lip 55 on the outer side. The lip 55 and the inner surface 51a define the opening 50a in combination with the inner end surface 53. The lip 55 extends along an extending direction of the first side surface 51 and annularly extends. The lip 55 also projects in the compressing direction (the arrow-c and -d directions illustrated in Fig. 4), which is a direction perpendicular to the reference plane P2. As illustrated in Figs. 4 and 5, the lip 55 is, for example, substantially in a triangular shape or substantially in a trapezoidal shape in cross section and the lip 55 has an inner inclined surface 55a, an outer inclined surface 55b, and a distal end surface 55c. In the cross section, the inner inclined surface 55a and the outer inclined surface 55b form, for example, straight lines or substantially straight lines inclined to each other and the distal end surface 55c forms, for example, a circular arc or an arc smoothly connecting the inner inclined surface 55a and the outer inclined surface 55b. The lip 55 has a distal end 55d, which is an end in the compressing direction, in the distal end surface 55c.

The inner surface 51a extends along the lip 55 on the inner side of the lip 55, being continuous with the lip 55 at an outer end and continuous with the inner end surface 53 at an inner end. Moreover, the outer surface 51b extends along the lip 55 on the outer side of the lip 55, being continuous with the lip 55 at an inner end and continuous with the outer end surface 54 at an outer end. The inner surface 51a extends along a plane and is, for example, parallel or substantially parallel with the contact surfaces 52a, 52b, 52c. Moreover, the outer surface 51b extends along a plane and is, for example, parallel or substantially parallel with the contact surfaces 52a, 52b, 52c. Moreover, as illustrated in, for example, Figs. 4 and 5, the inner surface 51a faces away from the contact surface 52a and the outer surface 51b faces away from the contact surface 52b, 52c in the compressing direction.

As described above, the height (an inner height h11) on the inner side of the lip 55 is higher than the height (an outer height h12) on the outer side of the lip 55 (the inner height h11 > the outer height h12). The inner height h11 of the lip 55 is a distance in the compressing direction between the distal end 55d of the lip 55 and the inner surface 51a as illustrated in, for example, Figs. 4 and 5. The outer height h12 of the lip 55 is a distance in the compressing direction between the distal end 55d of the lip 55 and the outer surface 51b as illustrated in, for example, Figs. 4 and 5. In other words, a thickness at the outer surface 51b (a thickness t11) of the gasket 50 is different from a thickness at the inner surface 51a (a thickness t12) of the gasket 50 as illustrated in Figs. 4 and 5. Specifically, the thickness t11 of the gasket 50 is larger than the thickness t12 of the gasket 50. It should be noted that the thickness t11 of the gasket 50 is a distance in the compressing direction between the contact surfaces 52b, 52c and the outer surface 51b and the thickness t12 of the gasket 50 is a distance in the compressing direction between the contact surface 52a and the inner surface 51a. Thus, in the gasket device 30, t11 donates a height of the outer surface 51b from the separator 32 and t12 donates a height of the inner surface 51a from the separator 32, and the inner surface 51a is lower with respect to the separator 32 than the outer surface 51b as illustrated in Fig. 4.

As described above, the second gasket 50 is fixed to the surface 32b of the separator 32 at the second side surface 52. The peripheral portion of the separator 32 to which the gaskets 40, 50 are fixed are formed with the two raised portions 33, 34 and the raised portions 33, 34 form, in the surface 32b, the recessed surfaces 33b, 34b recessed toward the surface 32a as described above.

As illustrated in Fig. 4, the recessed surfaces 33b, 34b of the raised portions 33, 34 of the separator 32 are in shapes corresponding to the raised portions 56, 57 of the second gasket 50 and the raised portions 56, 57 of the second gasket 50 are configured to be fitted in the recessed surfaces 33b, 34b, respectively. Moreover, the recessed surface 33b, 34b of the separator 32 are configured to come into contact with the raised portions 56, 57 of the gasket 50, respectively. Moreover, when the raised portions 56, 57 of the gasket 50 are fitted in the recessed surfaces 33b, 34b of the separator 32, respectively, the contact surfaces 52a, 52b, 52c of the gasket 50 are configured to come into contact with respective corresponding portions of the surface 32b of the separator 32.

As illustrated in Fig. 5, a number of recessed portions 56a, 57a are formed in top portions of the raised portions 56, 57 of the second gasket 50, respectively. The recessed portions 56a, 57a are shaped such that the raised portions 33d, 34d formed in the recessed surfaces 33b, 34b of the raised portions 33, 34 of the separator 32 are to be fitted in the recessed portions 56a, 57a, respectively.

The gasket device 30 is produced by, for example, combining the first gasket 40, the second gasket 50, and the separator 32, which are individually produced.

Specifically, the first gasket 40 is attached to the separator 32 by fitting the raised surfaces 33a, 34a of the raised portions 33, 34 formed on the separator 32 in the grooves 46, 47 formed in the second side surface 42 of the first gasket 40, respectively. In the first gasket 40 attached to the separator 32, the contact surfaces 42a, 42b, 42c of the gasket 40 are in contact with the surface 32a of the separator 32. As such, in the gasket device 30, the raised portions 33, 34 of the separator 32 hold the gasket 40 in an inward direction and an outward direction (the arrow-a and - b directions in Fig. 4). This makes it possible to firmly fix the gasket 40 to the separator 32, which reduces a movement of the gasket 40 in the inward direction and the outward direction with respect to the separator 32 even though the pressure in the inner space (the cathode space S1 and the anode space S2) of the water electrolysis device 2 is increased.

It should be noted that the grooves 46, 47 of the first gasket 40 and the raised portions 33, 34 of the separator 32 may have various shapes and sizes and may be in various forms. Moreover, the number of the grooves (the grooves 46, 47) and the number of the raised portions (the raised portions 33, 34) are not limited to two and may be one or three or more. For example, in a case where the cross-sectional shapes of the grooves 46, 47 of the gasket 40 and the raised portions 33, 34 (the raised surfaces 33a, 34a) of the separator 32 are tapered toward the direction that the surface 32a of the separator 32 faces as illustrated in Figs. 4 and 5, it is easy to position the gasket 40 with respect to the separator 32 and easy to fit the raised portions into the recessed portions.

Moreover, in the first gasket 40 attached to the separator 32, the protrusions 46a, 47a inside the grooves 46, 47 of the gasket 40 are fitted in the recessed portions 33c, 34c of the raised surfaces 33a, 34a of the separator 32, which makes it possible to more firmly fix the gasket 40 with respect to the separator 32.

As described above, it is possible to firmly fix the gasket 40 to the separator 32 by fitting the raised portions 33, 34 of the separator 32 in the grooves 46, 47 of the gasket 40, which makes it possible to eliminate the necessity of using an adhesive to fix the gasket 40 to the separator 32. It should be noted that an adhesive may be used to fix the gasket 40 to the separator 32.

The second gasket 50 is also attached to the separator 32 as the first gasket 40. In other words, the gasket 50 is attached to the separator 32 by fitting the raised portions 56, 57 formed in the second side surface 52 of the gasket 50 into the recessed surfaces 33b, 34b of the raised portions 33, 34 formed on the separator 32. In the gasket 50 attached to the separator 32, the contact surfaces 52a, 52b, 52c of the gasket 50 are in contact with the surface 32b of the separator 32. As such, in the gasket device 30, the raised portions 33, 34 of the separator 32 hold the gasket 50 in the inward direction and the outward direction (the arrow-a and -b directions in Fig. 4). This makes it possible to firmly fix the gasket 50 to the separator 32, which reduces a movement of the gasket 50 in the inward direction and the outward direction with respect to the separator 32 even though the pressure in the inner space (the cathode space S1 and the anode space S2) of the water electrolysis device 2 is increased.

It should be noted that the raised portions 56, 57 of the second gasket 50 and the raised portions 33, 34 (the recessed surfaces 33b, 34b) of the separator 32 may have various shapes and sizes and may be in various forms. Moreover, the number of the raised portions (the raised portions 56, 57) and the number of raised portions (the raised portions 33, 34) are not limited to two and may be one or three or more. For example, in a case where the cross-sectional shapes of the raised portions 56, 57 of the gasket 50 and the raised portions 33, 34 (the recessed surfaces 33b, 34b) of the separator 32 are tapered toward the direction that the surface 32a of the separator 32 faces as illustrated in Figs. 4 and 5, it is easy to position the second gasket 50 with respect to the separator 32 and easy to fit the raised portions into the recessed portions.

Moreover, in the second gasket 50 attached to the separator 32, the raised portions 33d, 34d of the recessed surfaces 33b, 34b of the separator 32 are fitted in the recessed portions 56a, 57a of the raised portions 56, 57 of the gasket 50, respectively, which makes it possible to more firmly fix the second gasket 50 to the separator 32.

As described above, it is possible to firmly fix the second gasket 50 to the separator 32 by fitting the raised portions 56, 57 of the gasket 50 into the recessed surfaces 33b, 34b of the raised portions 33, 34 of the separator 32, which makes it possible to eliminate the necessity of using an adhesive to fix the second gasket 50 to the separator 32. It should be noted that an adhesive may be used to fix the second gasket 50 to the separator 32.

Moreover, the first gasket 40 and the second gasket 50 may be integrally formed on the separator by injection molding or press molding with a mold to fix the first gasket 40 and the second gasket 50 to the separator 32 to produce the gasket device 30. In this case, the separator 32 is fixed inside the mold and an elastomer material is placed in a cavity of the mold by an injection molding or press molding technique. The gaskets 40, 50 are stuck to the separator 32 in this manner.

Next, description will be made on the gasket device 30 having the above-described configuration.

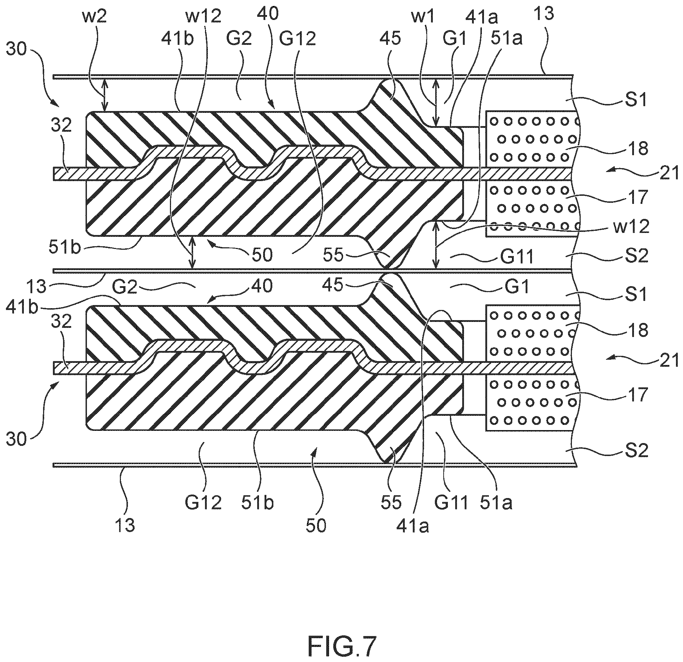

As illustrated in Fig. 7, in order to produce the water electrolysis device 2, a plurality of gasket devices 30 are arranged side by side in the same orientation with the polymer electrolyte membrane layer 13 being interposed between mutually adjacent two of the gasket devices 30. It should be noted that the orientation of the gasket devices 30 is based on the directions that the surfaces 32a, 32b of the separator 32 face. Moreover, the cathode current collector 18 or the anode current collector 17 is disposed in a space between the separator 32 of the gasket device 30 and the polymer electrolyte membrane layer 13. Specifically, the cathode current collector 18 is disposed in a space surrounded by the opening 40a of the first gasket 40 and the anode current collector 17 is disposed in a space surrounded by the opening 50a of the second gasket 50. Moreover, positions of the plurality of gasket devices 30 are aligned. Specifically, the positions of the plurality of gasket devices 30 are aligned so that, between mutually adjacent two of the gasket devices 30, the lip 45 and the lip 55 are opposed in the compressing direction with the polymer electrolyte membrane layer 13 in between. In this manner, the plurality of gasket devices 30 are arranged side by side and the components of the single electrolysis cell 21 are disposed between adjacent two of the gasket devices 30, thereby the components of the water electrolysis device 2 are disposed.

As described above, the plurality of gasket devices 30 are arranged side by side in the same orientation in the example in Fig. 7. In other words, in any of the gasket devices 30, the first gasket 40 is disposed on a cathode side, surrounding the cathode current collector 18, whereas the second gasket 50 is disposed on an anode side, surrounding the anode current collector 17.

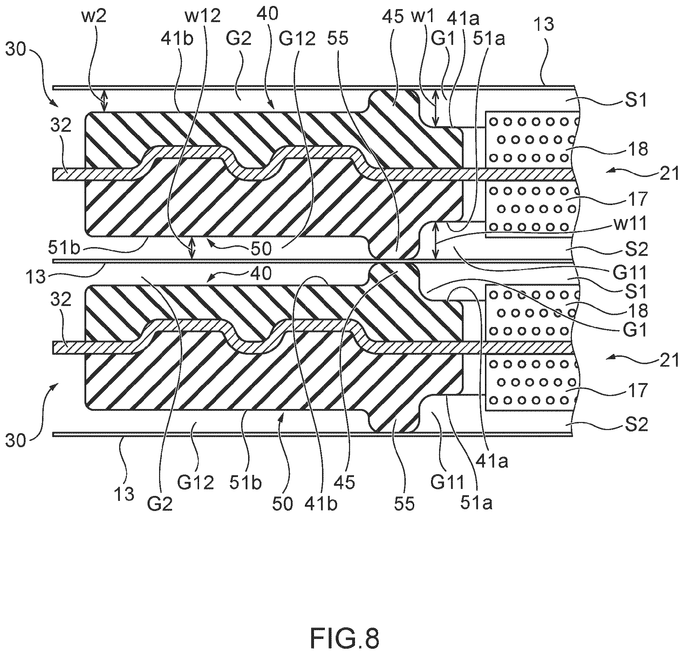

Next, the components of the water electrolysis device 2 formed as illustrated in Fig. 7 are compressed in a stacking direction (the compressing direction of the gasket device 30) with a member such as a bolt that integrates the water electrolysis device 2 as illustrated in Fig. 8. The first gasket 40 is thus compressed between the separator 32 and the polymer electrolyte membrane layer 13, so that the lip 45 of the first gasket 40 is compressed as being pressed against the polymer electrolyte membrane layer 13, gradually changing its shape. Here, the inner height h1 of the lip 45 is higher than the outer height h2 of the lip 45 and the lip 45 is shaped to be easier to tilt inward than outward. Moreover, a width (an inner width w1) in the compressing direction of a gap G1 between the polymer electrolyte membrane layer 13 and the inner surface 41a, which is a gap on the inner side of the lip 45, is wider than a width (an outer width w2) in the compressing direction of a gap G2 between the polymer electrolyte membrane layer 13 and the outer surface 41b, which is a gap on the outer side of the lip 45. This makes the compressed lip 45 deformable to expand into the gap G1 on the inner side. Thus, although stretching into both the gaps G1, G2, the compressed lip 45 is deformed to stretch more on a gap G1 side as illustrated in Fig. 8.

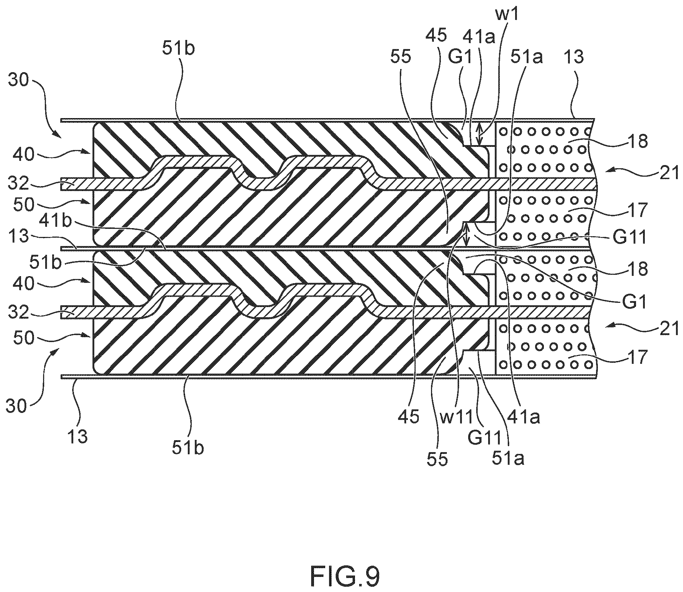

The components of the water electrolysis device 2 are further compressed in the stacking direction to assemble the water electrolysis device 2. At thit time, the lip 45 is further compressed and the compression of the lip 45 is continued until the polymer electrolyte membrane layer 13 comes into contact with the outer surface 41b of the gasket 40 as illustrated in Fig. 9. The water electrolysis device 2 is assembled in this manner, putting the gasket device 30 into the use state. In the use state of the gasket device 30, the lip 45 is compressed until the polymer electrolyte membrane layer 13 comes into contact with the outer surface 41b. In the use state of the gasket device 30, the gap G1 on the inner side of the lip 45 still has the inner width w1 and the gap G1 is present on the inner side of the lip 45 as illustrated in Fig. 9. Thus, in the use state of the gasket device 30, the lip 45 is deformed to expand toward the gap G1, stretching in the gap G1. As such, in the use state, the gasket 40 is in contact with the polymer electrolyte membrane layer 13 at the lip 45 and the outer surface 41b for sealing between the separator 32 and the polymer electrolyte membrane layer 13. The gap G1 is present on the inner side of the lip 45 until the gasket device 30 is put into the use state as described above, which makes the lip 45 unlikely to be caught between the outer surface 41b and the polymer electrolyte membrane layer 13 and, consequently, reduces biting.

When the components of the water electrolysis device 2 formed as illustrated in Fig. 7 are compressed in the stacking direction (the compressing direction of the gasket device 30), the second gasket 50 is also deformed as the above-described first gasket 40. In other words, as illustrated in Fig. 8, the second gasket 50 is compressed between the separator 32 and the polymer electrolyte membrane layer 13, so that the lip 55 of the second gasket 50 is compressed as being pressed against the polymer electrolyte membrane layer 13, gradually changing its shape. Here, the inner height h11 of the lip 55 is higher than the outer height h12 of the lip 55 and the lip 55 is shaped to be easier to tilt inward than outward. Moreover, a width (an inner width w11) in the compressing direction of a gap G11 between the polymer electrolyte membrane layer 13 and the inner surface 51a, which is a gap on the inner side of the lip 55, is wider than a width (an outer width w12) in the compressing direction of a gap G12 between the polymer electrolyte membrane layer 13 and the outer surface 51b, which is a gap on the outer side of the lip 55. This makes the compressed lip 55 deformable to expand into the gap G11 on the inner side. Thus, although stretching into both the gaps G11, G12, the compressed lip 55 is deformed to stretch more on a gap G11 side as illustrated in Fig. 8.

In further compressing the components of the water electrolysis device 2 in the stacking direction to assemble the water electrolysis device 2, the lip 55 is also further compressed as the lip 45 and the compression of the lip 55 is continued until the polymer electrolyte membrane layer 13 comes into contact with the outer surface 51b of the gasket 50 as illustrated in Fig. 9. As such, in the use state of the gasket device 30, the lip 55 is compressed until the polymer electrolyte membrane layer 13 comes into contact with the outer surface 51b. In the use state of the gasket device 30, the gap G11 on the inner side of the lip 55 still has the inner width w11 and the gap G11 is present on the inner side of the lip 55 as illustrated in Fig. 9. Thus, in the use state of the gasket device 30, the lip 55 is deformed to expand toward the gap G11, stretching in the gap G11. As such, in the use state, the gasket 50 is in contact with the polymer electrolyte membrane layer 13 at the lip 55 and the outer surface 51b for sealing between the separator 32 and the polymer electrolyte membrane layer 13. The gap G11 is present on the inner side of the lip 55 until the gasket device 30 is put into the use state as described above, which makes the lip 55 unlikely to be caught between the outer surface 51b and the polymer electrolyte membrane layer 13 and, consequently, reduces biting.

The gasket device 30 is put into the use state in the water electrolysis device 2 as described above for sealing between the separator 32 and the polymer electrolyte membrane layer 13. In the use state, the lips 45, 55 stretch in such a manner as to expand toward the gaps G1, G11 as described above, which increases contact widths of the lips 45, 55 with the polymer electrolyte membrane layer 13 as illustrated in Fig. 9. This increases the seal performance of the gasket device 30.

Moreover, in the use state, the outer surfaces 41b, 51b on the outer side of the lips 45, 55 are in contact with the polymer electrolyte membrane layer 13. Thus, in the use state, the outward tilting of the lips 45, 55 is prevented or reduced even though the pressures in the cathode space S1 and the anode space S2, which are surrounded by the gaskets 40, 50, respectively, become high. Moreover, the gaps G1, G11 are formed on the inner side of the lips 45, 55 and the lips 45, 55 are deformed to stretch in such a manner as to expand into the gaps G1, G11. Thus, as the pressures in the cathode space S1 and the anode space S2 surrounded by the gaskets 40, 50, respectively, become high, portions of the lips 45, 55 stretching within the gaps G1, G11 are pressed outward to be compressed and, consequently, the lips 45, 55 are further pressed against the polymer electrolyte membrane layer 13. As such, as the pressures in the cathode space S1 and the anode space S2 become high, the lips 45, 55 exhibit a so-called self-seal function to enhance the seal performance.

As such, according to the gasket device 30, it is possible to increase the widths of the contact surfaces between the gaskets 40, 50 and the polymer electrolyte membrane layer 13 and improve the seal performance. Moreover, even though the pressures in the cathode space S1 and the anode space S2 become high, the movements of the gaskets 40, 50 relative to the polymer electrolyte membrane layer 13 are reduced with the gaps being formed between the gaskets 40, 50 and the polymer electrolyte membrane layer 13, reducing the creation of a so-called flow-through gap. Moreover, the lips 45, 55 exhibit the self-seal function as the pressures in the cathode space S1 and the anode space S2 become high. From this point of view, the gaps are also formed between the gaskets 40, 50 and the polymer electrolyte membrane layer 13, reducing the creation of a so-called flow-through gap.

As described above, the first gasket 40, the second gasket 50, and the gasket device 30 according to the first embodiment of the present invention are capable of exhibiting a high sealing function even though the pressure in the inner space of the water electrolysis device 2 is increased.

It should be noted that the gasket device 30 may be considered to be in the use state where the lips 45, 55 are compressed to the extent that the polymer electrolyte membrane layer 13 does not contact the outer surfaces 41b, 51b as illustrated in Fig. 8. In this case, although the gaps G2, G12 are present on the outer sides of the lips 45, 55, the lips 45, 55 are unlikely to tilt toward the gaps G2, G12 on the outer side and thus the creation of a flow-through gap is reduced. Moreover, in this use state, the gasket device 30 also works to produce a similar effect as in the above-described use state in Fig. 9.

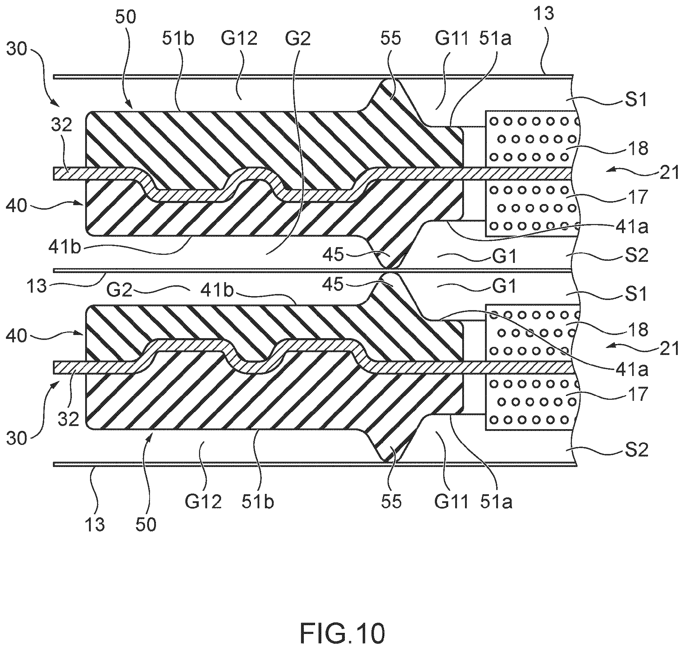

Fig. 10 is a cross-sectional view illustrating another way of arrangement of the plurality of gasket devices 30 in the hydrogen electrolysis device 2. In this example, two of the gasket devices 30 are arranged side by side in opposite directions to each other. In other words, in mutually adj acent two of the gasket devices 30, the first gasket 40 on one side faces the first gasket 40 on the opposite side with the polymer electrolyte membrane layer 13 in between, and the second gasket 50 on the one side faces the second gasket 50 on the opposite side with the polymer electrolyte membrane layer 13 in between. In other words, in mutually adj acent two of the gasket devices 30, the lip 45 of the first gasket 40 on one side faces the lip 45 of the first gasket 40 on the opposite side with the polymer electrolyte membrane layer 13 in between, and the lip 55 of the second gasket 50 on the one side faces the lip 55 of the second gasket 50 on the opposite side with the polymer electrolyte membrane layer 13 in between. In this case, the above-described use state illustrated in Figs. 7 to 9 is likewise provided, so that the gasket devices 30 work in a similar manner.

As such, in the water electrolysis device 2, each of the gasket devices 30 are usable in any orientation. Therefore, it is not necessarily for a worker who assembles the water electrolysis device 2 to pay attention to the orientations of the gasket devices 30.

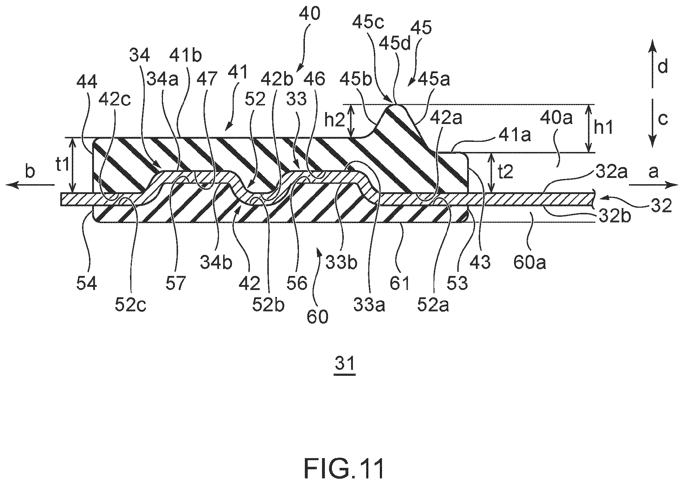

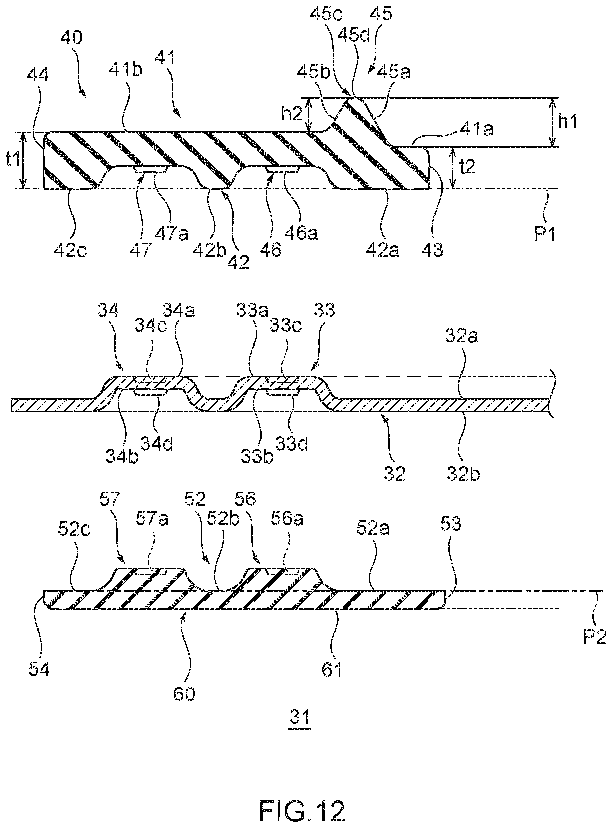

Fig. 11 is a cross-sectional view illustrating a gasket device 31 according to a modification example of the first embodiment of the present invention and corresponds to the cross section along the line IV-IV in Fig. 3 as in Fig. 4. Moreover, Fig. 12 is an exploded cross-sectional view of the gasket device 31. Figs. 11 and 12 illustrate the gasket device 31 in a state where no external force is applied as in Figs. 4 and 5.

The gasket device 31 according to the present modification example is different from the above-described gasket device 30 in that the gasket device 31 includes a second gasket 60 in place of the second gasket 50. Hereinbelow, a component of the gasket device 31 that is the same as or has a similar function to the component of the above-described gasket device 30 is labelled with the same reference sign and, accordingly, the description thereof is omitted, and a description will be made on a different component from that of the gasket device 30.

The second gasket 60 is made of the same elastomer as the gasket 50. The second gasket 60 has a first side surface 61, which is different from the first side surface 51 of the gasket 50. The first side surface 61 is an annular surface parallel or substantially parallel with the surface 32b of the separator 32 as illustrated in Figs. 11 and 12. As such, the second gasket 60 includes no projecting lip.

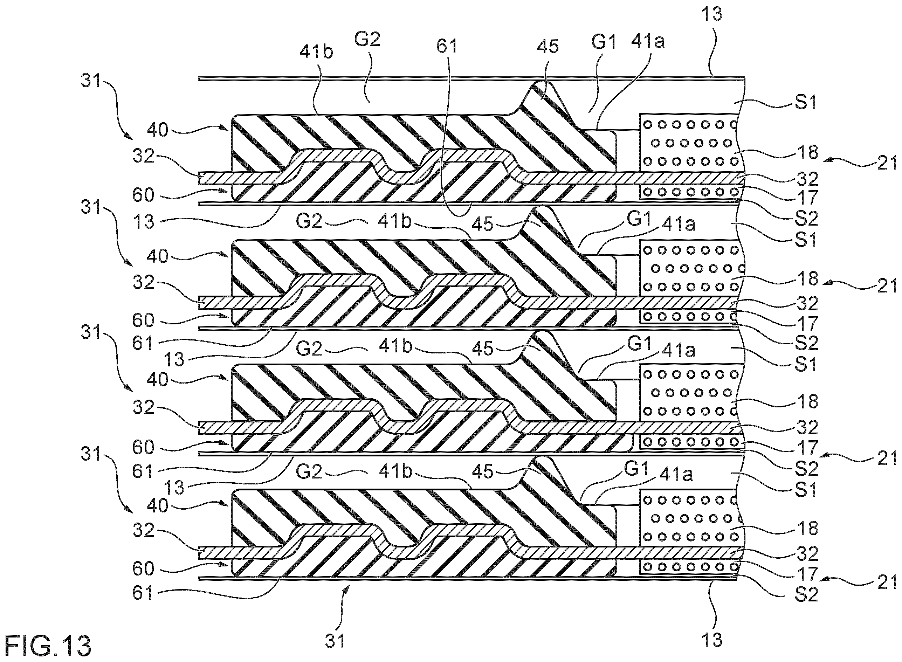

Next, description will be made on workings of the gasket device 31 having the above-described configuration. As illustrated in Fig. 13, in order to produce the water electrolysis device 2, a plurality of gasket devices 31 are arranged side by side in the same orientation with the polymer electrolyte membrane layer 13 being interposed between mutually adjacent two of the gasket devices 31. Moreover, the cathode current collector 18 or the anode current collector 17 is disposed in a space between the separator 32 of the gasket device 31 and the polymer electrolyte membrane layer 13. Specifically, for example, the cathode current collector 18 is disposed in a space surrounded by the opening 40a of the first gasket 40 and the anode current collector 17 is disposed in a space surrounded by an opening 60a of the second gasket 60. Positions of the plurality of gasket devices 31 are aligned and, in particular, a position of the lip 45 of each of the gasket devices 31 is aligned with a position of the lip 45 of another gasket device 31.

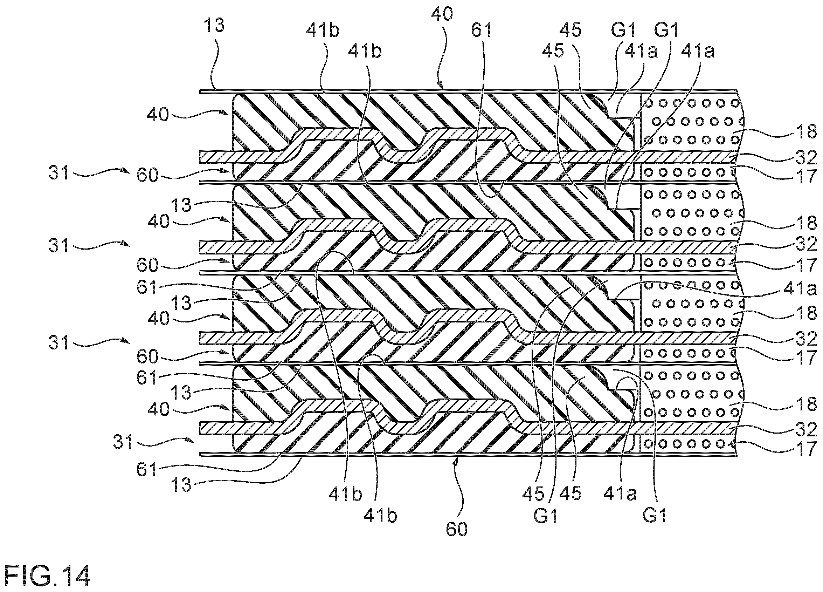

Similarly to the above-described gasket device 30, the gasket device 31 is put into the use state as illustrated in Fig. 14 by compressing the lip 45 until polymer electrolyte membrane layer 13 comes into contact with the outer surface 41b of the first gasket 40. In the use state, the gasket device 31 works as the above-described gasket device 30, sealing the cathode space S1. In contrast, in the use state, the second gasket 60 is compressed between the separator 32 and the polymer electrolyte membrane layer 13 and the whole of the first side surface 61 is pressed against the polymer electrolyte membrane layer 13. As such, a width (a seal width) of a contact surface between the second gasket 60 and the polymer electrolyte membrane layer 13 is larger than a seal width between the second gasket 50 of the gasket device 30 and the polymer electrolyte membrane layer 13. The second gasket 60 thus enables an improvement in seal performance as the second gasket 50.

It should be noted that the plurality of gasket devices 31 are arranged side by side in the same orientation in the example illustrated in Figs. 13 and 14. In other words, in any of the gasket devices 31, the first gasket 40 is disposed on a cathode side, surrounding the cathode current collector 18, whereas the second gasket 60 is disposed on an anode side, surrounding the anode current collector 17. However, the first gasket 40 may be disposed on the anode side, surrounding the anode current collector 17, whereas the second gasket 60 may be disposed on the cathode side, surrounding the cathode current collector 18. Moreover, the plurality of gasket devices 31 may be arranged side by side in different orientations.

### Second Embodiment

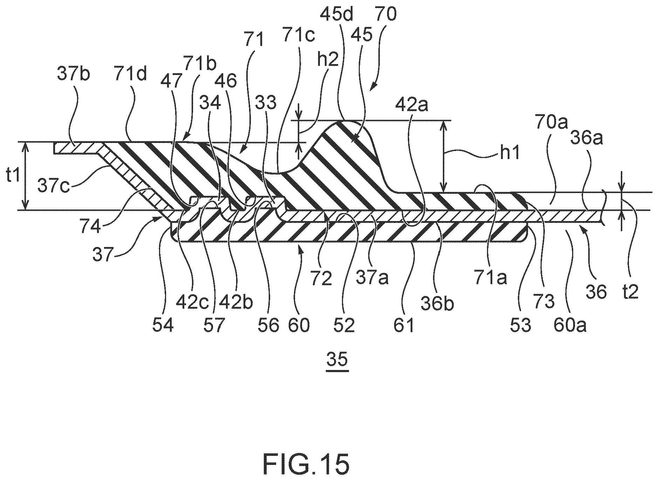

Next, description will be made on a gasket device 35 according to a second embodiment of the present invention. Fig. 15 is a cross-sectional view of the gasket device 35 and is also a cross-sectional view corresponding to the cross section of the above-described gasket device 30 (see Fig. 4). The gasket device 35 includes a gasket 70 according to the second embodiment of the present invention, which is different from the first gasket 40 of the gasket device 30, and a separator 36, which is different from the separator 32 of the gasket device 30. Moreover, the gasket device 35 includes the second gasket 60 of the above-described gasket device 31. The gasket 70, which corresponds to the gaskets 19, 20 of the water electrolysis device 2, annularly extends as the above-described gasket 40. Hereinbelow, a component of the gasket device 35 that is the same as or has a similar function to the component of the above-described gasket device 30 or gasket device 31 is labelled with the same reference sign and, accordingly, the description thereof is omitted, and a description will be made on a different component from that of the gasket device 30.

As illustrated in Fig. 15, the separator 36 includes a pair of surfaces 36a, 36b facing away from each other. An end portion on the outer side of the separator 36 is formed with a stepped portion 37 forming a step in directions that the surfaces 36a, 36b face. As illustrated in Fig. 15, the stepped portion 37 forms a step projecting in the direction that, for example, the surface 36a faces. The stepped portion 37 extends along the end portion on the outer side of the separator 36 and also annularly extends. Moreover, the separator 36 is likewise provided with the raised portions 33, 34 of the separator 32.

As illustrated in Fig. 15, the stepped portion 37 forms, within the separator 36, an inner portion 37a and an outer end portion 37b and includes an annularly extending side wall portion 37c between the inner portion 37a and the outer end portion 37b. The outer end portion 37b, which is an end portion on the outer side of the separator 36, extends at a position at a predetermined distance in the direction that the surface 36a faces from the inner portion 37a and in parallel or substantially in parallel with the inner portion 37a. The side wall portion 37c has a shape inclined outward toward the direction that the surface 36a faces as illustrated in, for example, Fig. 15. Specifically, for example, the side wall portion 37c extends, in cross section, along a straight line inclined outward with respect to the inner portion 37a of the separator 36 as illustrated in Fig. 15. It should be noted that the side wall portion 37 may have another shape. For example, the side wall portion 37 may extend perpendicularly or substantially perpendicularly to the inner portion 37a and may be inclined inward with respect to the inner portion 37a.

As illustrated in Fig. 15, the gasket 70 has a first side surface 71, a second side surface 72, an inner end surface 73, and an outer end surface 74 and is shaped by the first side surface 71, the second side surface 72, the inner end surface 73, and the outer end surface 74. The first side surface 71 is an annular surface facing the polymer electrolyte membrane layer 13 in the electrolysis cell 21 (see Fig. 2), and in the gasket device 35, the first side surface 71 faces in the direction that the surface 36a of the separator 36 faces. The second side surface 72 is an annular surface facing the surface 36a of the separator 36 and is fixed to the surface 36a of the separator 36. The inner end surface 73 is an annular surface facing the inner side and defines an opening 70a. The opening 70a is a space in which the anode current collector 17 or the cathode current collector 18 is disposed within the electrolysis cell 21 and is also a part of the electrolysis cell 21 (see Fig. 2). The outer end surface 74 is on the opposite side to the inner end surface 73 and is an annular surface facing the outer side.

As illustrated in Fig. 15, the second side surface 72, which has a similar shape to the second side surface 42 of the gasket 40, is formed with the grooves 46, 47 in which the raised portions 33, 34 of the separator 32 are to be received, respectively, and has the annularly extending the three contact surfaces 42a, 42b, 42c divided by the grooves 46, 47. The contact surfaces 42a, 42b, 42c come into contact with the surface 36a at the inner portion 37a of the separator 36. The outer end surface 74 is a surface corresponding to the side wall portion 37c of the stepped portion 37 of the separator 36 and comes into contact with the surface 36a of the separator 36 at the side wall portion 37c. Moreover, the first side surface 71 has an inner surface 71a, which is similar to the inner surface 41a of the first side surface 41 of the gasket 40, the lip 45, and an outer surface 71b on the outer side of the lip 45 as illustrated in Fig. 15. The outer surface 71b includes, for example, a recessed surface portion 71c recessed on a separator 36 side and a flat surface portion 71d in the form of a flat surface as illustrated in Fig. 15. The flat surface portion 71d forms a surface parallel or substantially parallel with the second side surface 72. The flat surface portion 71d is flush or substantially flush with the surface 36a at the outer end portion 37b of the separator 36 as illustrated in, for example, Fig. 15. The flat surface portion 71d may be located on the side in the direction that the surface 36a faces, farther than the outer end portion 37b. Moreover, the flat surface portion 71d may be located on the side in the direction that the surface 36b faces, farther than the surface 36a at the outer end portion 37b. The recessed surface portion 71c is located between the lip 45 and the flat surface portion 71d. It should be noted that the gasket 70 does not have to include the recessed surface portion 71c, the flat surface portion 71d may be continuous with the lip 45, and the first side surface 71 of the gasket 70 may be similar in shape to the first side surface 41 of the above-described gasket 40. The raised portions 33, 34 of the separator 36 are received in the grooves 46, 47 of the second side surface 72 of the gasket 70, respectively, as in the above-described gasket 40, and the gasket 70 is held by the separator 36 in the inward direction and the outward direction, being fixed to the separator 36 as the gasket 40. It should be noted that an adhesive may be used to fix the separator 36 to the gasket 70.

As illustrated in Fig. 15, the inner height h1 of the lip 45 is higher than the outer height h2) of the lip 45 (the inner height h1 > the outer height h2). Moreover, the thickness t1 at the outer surface 71b of the gasket 70 is larger than the thickness t2 at the inner surface 71a of the gasket 70. It should be noted that the outer height h2 of the lip 45 is a distance in the compressing direction between the distal end 45d of the lip 45 and the flat surface portion 71d of the outer surface 71b as illustrated in, for example, Fig. 15. Moreover, the thickness t1 at the outer surface 71b of the gasket 70 is a thickness at the flat surface portion 71d of the outer surface 71b as illustrated in, for example, Fig. 15.

As illustrated in Fig. 15, the surface 36b at the inner portion 37a of the separator 36 is attached with the gasket 60 as in the above-described gasket device 31.

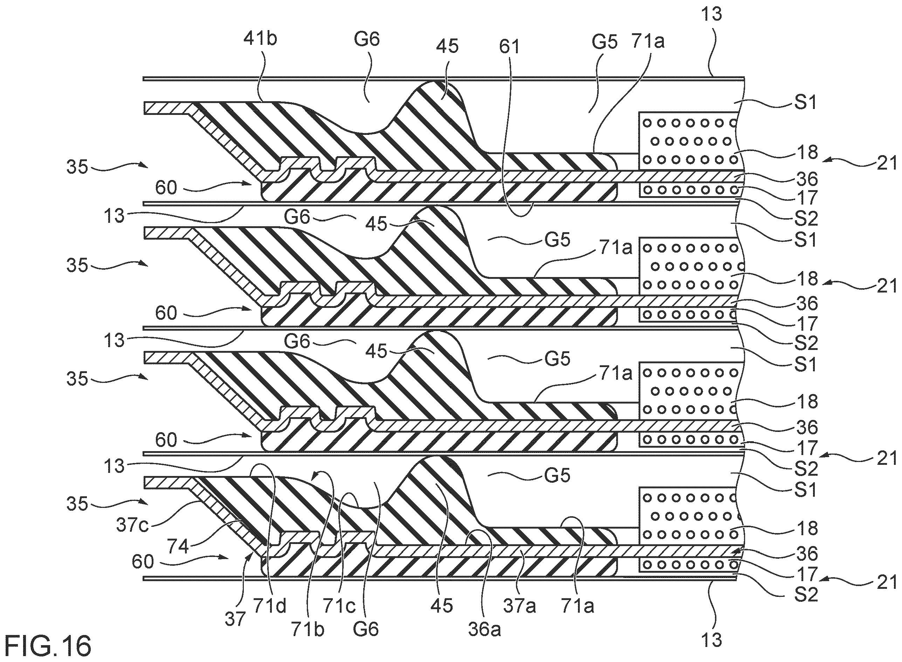

Next, description will be made on workings of the gasket device 35 having the above-described configuration. As illustrated in Fig. 16, in order to produce the water electrolysis device 2, a plurality of gasket devices 35 are arranged side by side in the same orientation with the polymer electrolyte membrane layer 13 being interposed between mutually adjacent two of the gasket devices 35. Moreover, the cathode current collector 18 or the anode current collector 17 is disposed in a space between the separator 36 of the gasket device 35 and the polymer electrolyte membrane layer 13. Specifically, for example, the cathode current collector 18 is disposed in a space surrounded by the opening 70a of the first gasket 70 and the anode current collector 17 is disposed in a space surrounded by the opening 60a of the second gasket 60. Moreover, positions of the plurality of gasket devices 35 are aligned and, in particular, a position of the lip 45 of each of the gasket devices 35 is aligned with a position of the lip 45 of another gasket device 35. The components of the water electrolysis devices 2 are thus aligned.

Similarly to the above-described gasket devices 30, 31, the components of the water electrolysis device 2 formed as illustrated in Fig. 16 are compressed in the stacking direction with a member such as a bolt for assembling the water electrolysis device 2. When the lip 45 is compressed only by an amount corresponding to a predetermined allowance between the polymer electrolyte membrane layer 13 and the separator 36, the gasket device 35 is put into the use state. In the use state, the polymer electrolyte membrane layer 13 is not in contact with the outer end portion 37b of the separator 36 of each of the gasket devices 35 and not in contact with the outer surface 71b of the gasket 70. It should be noted that in the use state, the polymer electrolyte membrane layer 13 may be in contact with the outer end portion 37b of the separator 36 of each of the gasket devices 35. Moreover, in the use state, the polymer electrolyte membrane layer 13 may be in contact with the outer surface 71b of the gasket 70. In this case, only the flat surface portion 71d of the outer surface 71b of the gasket 70 may be configured to come into contact with the polymer electrolyte membrane layer 13 or the flat surface portion 71d and the recessed surface portion 71c of the outer surface 71b of the gasket 70 may be configured to come into contact with the polymer electrolyte membrane layer 13.

In contrast, in the use state, the second gasket 60 is compressed between the separator 36 and the polymer electrolyte membrane layer 13 and the whole of the first side surface 61 is pressed against the polymer electrolyte membrane layer 13 as in the above-described gasket device 31.

In the use state, the gasket device 70 works as the above-described gasket devices 30, 31 to seal the cathode space S1 and the anode space S2. In other words, when the lip 45 is compressed, the lip 45 stretches to expand into a gap G5 between the inner surface 71a of the first side surface 71 and the polymer electrolyte membrane layer 13 and into a gap G6 between the outer surface 71b of the first side surface and the polymer electrolyte membrane layer 13. The lip 45 is configured to be easier to tilt and more deformable to expand toward the gap G5 on the inner side than toward the gap G6 on the outer side as the lip 45 of the above-described gasket 40. Moreover, the gap G6 on the outer side is narrower than the gap G5 on the inner side. Thus, in the use state, the lip 45 produces the self-seal function as the lips 45 of the above-described gasket devices 30, 31. Moreover, the gasket 70 is in contact with the side wall portion 37c of the stepped portion 37 of the separator 36 at the outer end surface 74, so that when a force toward the outer side is applied to the gasket 70, a reaction force toward the inner side is generated and the reaction force is applied to the gasket 70. The reaction force serves to improve the seal performance based on the self-seal of the lip 45. Moreover, this allows the gasket 70 to be firmly fixed to the separator 36 by the side wall portion 37c of the stepped portion 37 as well as by the raised portions 33, 34, so that it is possible to reduce a movement of the gasket 70 in the inward direction and the outward direction with respect to the separator 36 even though the pressure in the inner space (the cathode space S1 and the anode space S2) of the water electrolysis device 2 is increased.

It should be noted that in a case where, in the use state, a portion (for example, the flat surface portion 71d) of the outer surface 71b within the first side surface 71 of the lip 45 is also in contact with the polymer electrolyte membrane layer 13 or the flat surface portion 71d and the recessed surface portion 71c of the outer surface 71b of the first side surface 71 of the lip 45 are also in contact with the polymer electrolyte membrane layer 13, it is possible to further improve the seal performance based on the self-seal function exhibited by the lip 45.

As described above, the gasket 70 and the gasket device 35 according to the second embodiment of the present invention are capable of exhibiting a high sealing function even though the pressure in the inner space of the water electrolysis device 2 is increased.

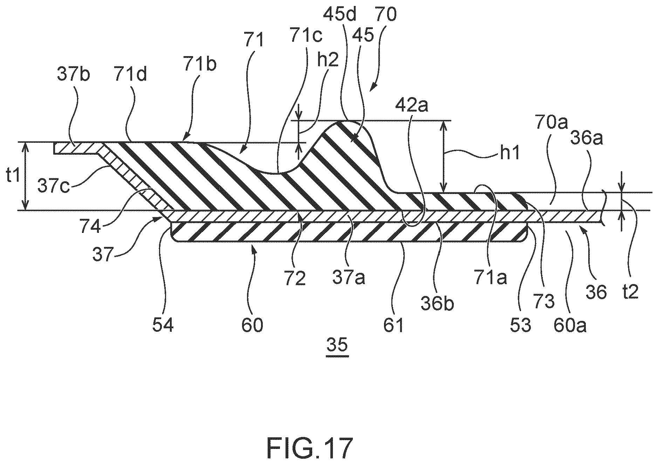

Next, description will be made on a modification example of the gasket device 35 according to the second embodiment of the present invention. Fig. 17 is a cross-sectional view illustrating the modification example of the gasket device 35 according to the second embodiment of the present invention. As illustrated in Fig. 17, the separator 36 of the gasket device 35 may include neither of the raised portions 33, 34. Accordingly, the gasket 70 of the gasket device 35 may include neither of the grooves 46, 47 and the second gasket 60 of the gasket device 35 may include neither of the raised portions 56, 57.

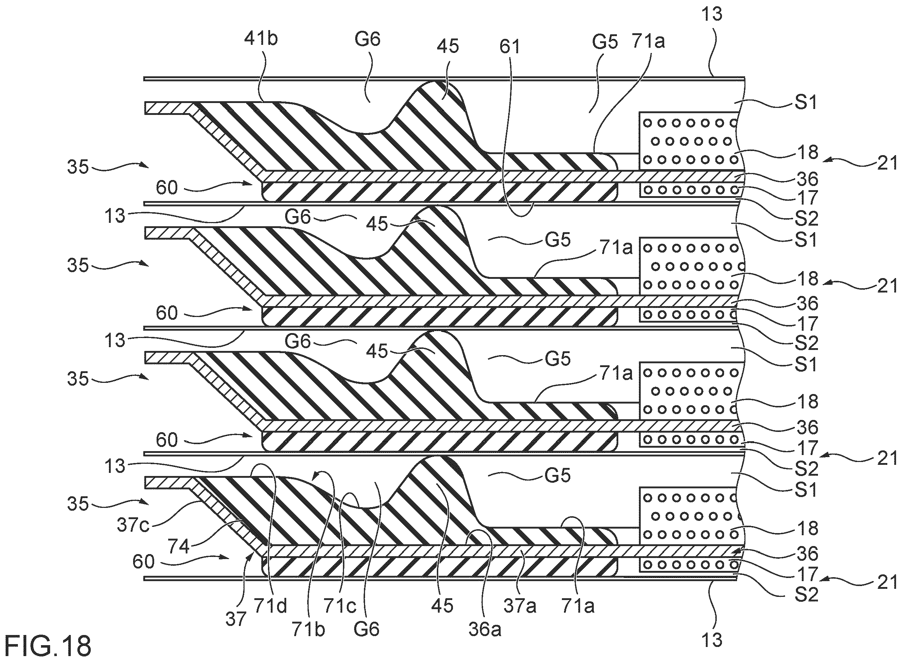

Fig. 18 is a cross-sectional view for explaining the gasket device 35 according to the modification example in the use state. In order to produce the water electrolysis device 2, the gasket devices 35 according to the modification example are arranged side by side in a similar manner to the gasket devices 35 according to the second embodiment of the present invention. In other words, in order to produce the water electrolysis device 2, a plurality of gasket devices 35 according to the modification example are arranged side by side in the same orientation with the polymer electrolyte membrane layer 13 being interposed between mutually adjacent two of the gasket devices 35 according to the modification example as illustrated in Fig. 18. The gasket device 35 according to the modification example also forms the water electrolysis device 2, being put into the use state as the above-described gasket device 35 according to the second embodiment of the present invention, and works as the above-described gasket device 35 according to the second embodiment of the present invention.

In the gasket device 35 according to the modification example, although there is no engagement between the gasket 70 and the separator 36 caused by the raised portions 33, 34 being received in the grooves 46, 47, the outer end surface 74 of the gasket 70 is in contact with the side wall portion 37c of the stepped portion 37 of the separator 36. As such, the side wall portion 37c of the separator 36 holds the gasket 70 in the inward direction and the outward direction (the arrow-a and -b directions in Fig. 4). This makes it possible to firmly fix the gasket 70 to the separator 36, which reduces a movement of the gasket 70 in the inward direction and the outward direction with respect to the separator 36 even though the pressure in the inner space (the cathode space S1 and the anode space S2) of the water electrolysis device 2 is increased.

### Third Embodiment

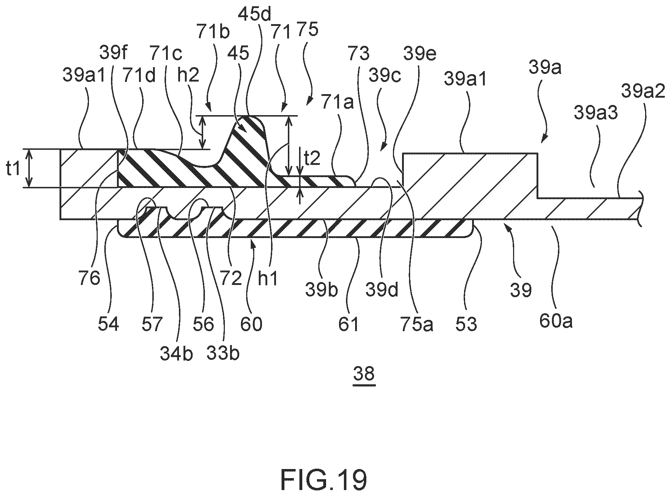

Next, description will be made on a gasket device 38 according to a third embodiment of the present invention. Fig. 19 is a cross-sectional view of the gasket device 38 and is also a cross-sectional view corresponding to the cross section of the above-described gasket device 30 (see Fig. 4). The gasket device 38 includes a gasket 75 according to the third embodiment of the present invention, which is different from the gasket 70 of the gasket device 35, and a separator 39, which is different from the separator 36 of the gasket device 35. Moreover, the gasket device 38 includes the second gasket 60 of the above-described gasket device 31. The gasket 75, which corresponds to the gaskets 19, 20 of the water electrolysis device 2, annularly extends as the above-described gasket 70. Hereinbelow, a component of the gasket device 38 that is the same as or has a similar function to the components of the above-described gasket devices 30, 31, 35 is labelled with the same reference sign and, accordingly, the description thereof is omitted, and a description will be made on a different component from those of the gasket devices 30, 35.

The separator 39 is, for example, a plate-shaped separator made of a porous carbon material. As illustrated in Fig. 19, the separator 39 has a pair of surfaces 39a, 39b facing away from each other. The surface 39a forms, at an end portion on the outer side of the separator 39, a projecting surface portion 39a1 projecting more than the inner side and forms, on the inner side of the projecting surface portion 39a1, a flat surface portion 39a2 in the form of or substantially in the form of a flat surface. The projecting surface portion 39a1 annularly extends to surround the flat surface portion 39a2 and the surface 39a forms a recessed portion 39a3, which is surrounded by the projecting surface portion 39a1. The surface 39b is a flat or substantially flat surface and is parallel or substantially parallel with the flat surface portion 39a2 of the surface 39a and the surface 39b. The projecting surface portion 39a1 of the surface 39a of the separator 39 is formed with a groove 39c recessed from the projecting surface portion 39a1. The groove 39c extends along the end portion on the outer side of the separator 39 and also annularly extends. It should be noted that the separator 39 is provided with neither of the raised portions 33d, 34d of the separator 32.

As illustrated in Fig. 19, the groove 39c has a bottom surface 39d, an inner wall surface 39e, and an outer wall surface 39f. The inner wall surface 39e is a surface extending from an end on the inner side of the bottom surface 39d to the surface 39a and the outer wall surface 39f is a surface extending from an end on the outer side of the bottom surface 39d to the surface 39a. The inner wall surface 39e and the outer wall surface 39f are opposed to each other with the bottom surface 39d in between. The bottom surface 39d is parallel or substantially parallel with the surface 39a or the surface 39b. The inner wall surface 39e and the outer wall surface 39f extend perpendicularly or substantially perpendicularly to the bottom surface 39d. The inner wall surface 39e and the outer wall surface 39f may be inclined with respect to the bottom surface 39d.

As illustrated in Fig. 19, the surface 39b of the separator 39 is formed with the recessed surfaces 33b, 34b of the above-described separators 32, 36. The recessed surfaces 33b, 34b are along the end portion on the outer side of the separator 39 and is, for example, formed in such a manner as to face away from the projecting surface portion 39a1.

As illustrated in Fig. 19, the gasket 75 has the first side surface 71, the second side surface 72, the inner end surface 73, and the outer end surface 76, which are similar to those of the gasket 70, and is shaped by the first side surface 71, the second side surface 72, the inner end surface 73, and the outer end surface 76. As illustrated in Fig. 19, the second side surface 72 is in contact with the bottom surface 39d of the groove 39c of the separator 39. The outer end surface 76 is a surface corresponding to the outer wall surface 39f of the groove 39c of the separator 39 and is in contact with the outer wall surface 39f. Moreover, as illustrated in Fig. 19, the inner end surface 73 is not in contact with the inner wall surface 39e of the groove 39c with a gap being formed between the inner end surface 73 and the inner wall surface 39e. The flat surface portion 71d of the first side surface 71 of the gasket 75 is flash or substantially flush with the projecting surface portion 39a1 of the surface 39a of the separator 39 as illustrated in, for example, Fig. 19. The flat surface portion 71d may be located on a side in the direction that the surface 39a faces, farther than the projecting surface portion 39a1. Moreover, the flat surface portion 71d may be located on a side in a direction that the surface 39b faces, farther that the projecting surface portion 39a1. It should be noted that the gasket 75 does not have to include the recessed surface portion 71c, the flat surface portion 71d may be continuous with the lip 45, and the first side surface 71 of the gasket 75 may be similar in shape to the first side surface 41 of the above-described gasket 40. The second side surface 72 of the gasket 75 does not have to be fixed to the bottom surface 39d of the groove 39c of the separator 39 or may be fixed with an adhesive or the like.

As illustrated in Fig. 19, the inner height h1 of the lip 45 is higher than the outer height h2 of the lip 45 (the inner height h1 > the outer height h2). Moreover, the thickness t1 at the outer surface 71b of the gasket 75 is larger than the thickness t2 at the inner surface 71a of the gasket 75. It should be noted that the outer height h2 of the lip 45 is a distance in the compressing direction between the distal end 45d of the lip 45 and the flat surface portion 71d of the outer surface 71b as illustrated in, for example, Fig. 19. Moreover, the thickness t1 at the outer surface 71b of the gasket 70 is a thickness at the flat surface portion 71d of the outer surface 71b as illustrated in, for example, Fig. 19.

As illustrated in Fig. 19, the surface 39b of the separator 39 is attached with the gasket 60 as in the above-described gasket device 31.

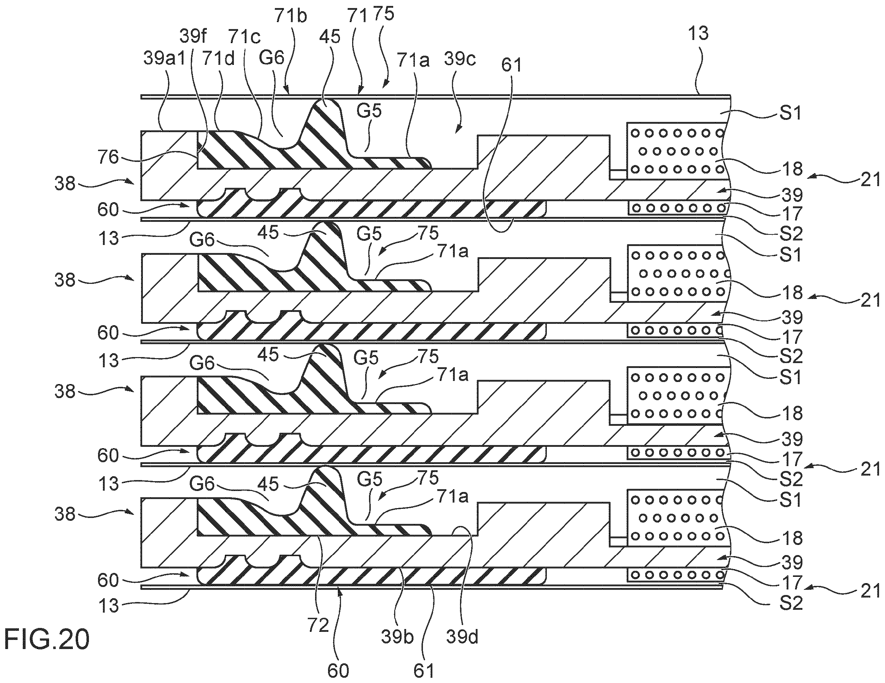

Next, description will be made on workings of the gasket device 38 having the above-described configuration. As illustrated in Fig. 20, in order to produce the water electrolysis device 2, a plurality of gasket devices 38 are arranged side by side in the same orientation with the polymer electrolyte membrane layer 13 being interposed between mutually adjacent two of the gasket devices 38. Moreover, the cathode current collector 18 or the anode current collector 17 is disposed in a space (the recessed surface portion 39a3 of the separator 39) between the polymer electrolyte membrane layer 13 and the separator 39 of the gasket device 38. Specifically, for example, the cathode current collector 18 is disposed in a space surrounded by an opening 75a of the first gasket 75 and the anode current collector 17 is disposed in a space surrounded by the opening 60a of the second gasket 60. Moreover, positions of the plurality of gasket devices 38 are aligned and, in particular, a position of the lip 45 of each of the gasket devices 38 is aligned with a position of the lip 45 of another gasket device 38. The components of the water electrolysis devices 2 are thus aligned.

Similarly to the above-described gasket devices 30, 31, the components of the water electrolysis device 2 formed as illustrated in Fig. 20 are compressed in the stacking direction with a member such as a bolt for assembling the water electrolysis device 2. When the lip 45 is compressed only by an amount corresponding to a predetermined allowance between the polymer electrolyte membrane layer 13 and the separator 39, the gasket device 38 is put into the use state. In the use state, the polymer electrolyte membrane layer 13 is not in contact with the projecting surface portion 39a1 of the separator 39 of each of the gasket devices 38 and not in contact with the outer surface 71b of the gasket 75. It should be noted that in the use state, the polymer electrolyte membrane layer 13 may be in contact with the projecting surface portion 39a1 of the separator 39 of each of the gasket devices 38. Moreover, in the use state, the polymer electrolyte membrane layer 13 may be in contact with the outer surface 71b of the gasket 75. **In** this case, only the flat surface portion 71d of the outer surface 71b of the gasket 75 may be configured to come into contact with the polymer electrolyte membrane layer 13 or the flat surface portion 71d and the recessed surface portion 71c of the outer surface 71b of the gasket 70 may be configured to come into contact with the polymer electrolyte membrane layer 13.

In contrast, in the use state, the second gasket 60 is compressed between the separator 39 and the polymer electrolyte membrane layer 13 and the whole of the first side surface 61 is pressed against the polymer electrolyte membrane layer 13 as in the above-described gasket device 31.

In the use state, the gasket device 38 works as the above-described gasket device 30 to seal the cathode space S1 and the anode space S2. In other words, when the lip 45 is compressed, the lip 45 stretches to expand into the gap G5 between the inner surface 71a of the first side surface 71 and the polymer electrolyte membrane layer 13 and into the gap G6 between the outer surface 71b of the first side surface and the polymer electrolyte membrane layer 13. The lip 45 is configured to be easier to tilt and more deformable to expand toward the gap G5 on the inner side than toward the gap G6 on the outer side as the lip 45 of the above-described gasket 40. Moreover, the gap G6 on the outer side is narrower than the gap G5 on the inner side. Thus, in the use state, the lip 45 produces the self-seal function as the lips 45 of the above-described gasket devices 30, 31, 35. Moreover, the gasket 75 is in contact with the outer wall surface 39f of the groove 39c of the separator 39 at the outer end surface 76, so that when a force toward the outer side is applied to the gasket 75, a reaction force toward the inner side is generated and the reaction force is applied to the gasket 75. The reaction force serves to improve the seal performance based on the self-seal of the lip 45. Moreover, this makes it possible to firmly fix the gasket 75 to the separator 39, which reduces a movement of the gasket 75 in the inward direction and the outward direction with respect to the separator 39 even though the pressure in the inner space (the cathode space S1 and the anode space S2) of the water electrolysis device 2 is increased.

It should be noted that in a case where, in the use state, a portion (for example, the flat surface portion 71d) of the outer surface 71b within the first side surface 71 of the lip 45 is also in contact with the polymer electrolyte membrane layer 13 or the flat surface portion 71d and the recessed surface portion 71c of the outer surface 71b of the first side surface 71 of the lip 45 are also in contact with the polymer electrolyte membrane layer 13, it is possible to further improve the seal performance based on the self-seal function exhibited by the lip 45.

As described above, the gasket 75 and the gasket device 38 according to the third embodiment of the present invention are capable of exhibiting a high sealing function even though the pressure in the inner space of the water electrolysis device 2 is increased.

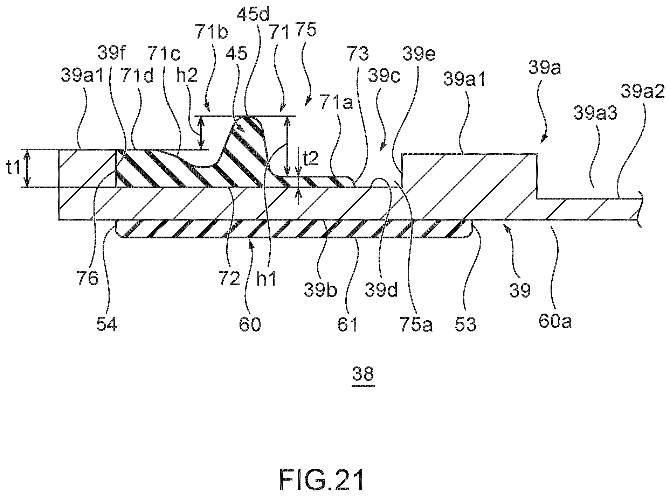

Next, description will be made on a modification example of the gasket device 38 according to the third embodiment of the present invention. Fig. 21 is a cross-sectional view illustrating the modification example of the gasket device 38 according to the third embodiment of the present invention. As illustrated in Fig. 21, the separator 39 of the gasket device 38 may include neither of the recessed surface 33b, 34b. Accordingly, the second gasket 60 of the gasket device 38 may include neither of the raised portions 56, 57.

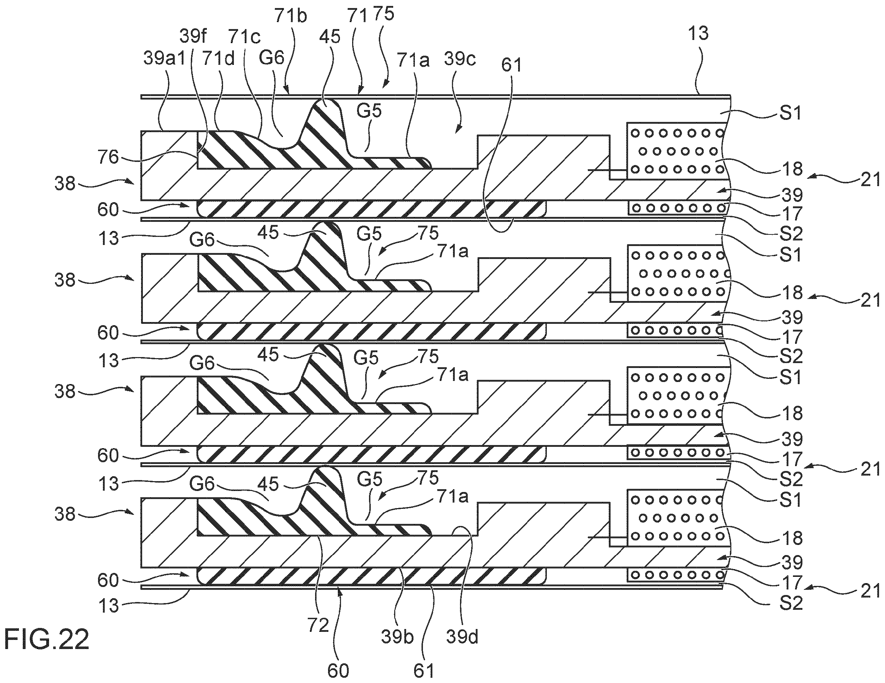

Fig. 22 is a cross-sectional view for explaining the gasket device 38 according to the modification example in the use state. In order to produce the water electrolysis device 2, the gasket devices 38 according to the modification example are arranged side by side in a similar manner to the gasket devices 38 according to the third embodiment of the present invention. In other words, in order to produce the water electrolysis device 2, a plurality of gasket devices 38 according to the modification example are arranged side by side in the same orientation with the polymer electrolyte membrane layer 13 being interposed between mutually adjacent two of the gasket devices 38 according to the modification example as illustrated in Fig. 22. The gasket device 38 according to the modification example also forms the water electrolysis device 2, being put into the use state as the above-described gasket device 38 according to the third embodiment of the present invention, and works as the above-described gasket device 38 according to the third embodiment of the present invention.

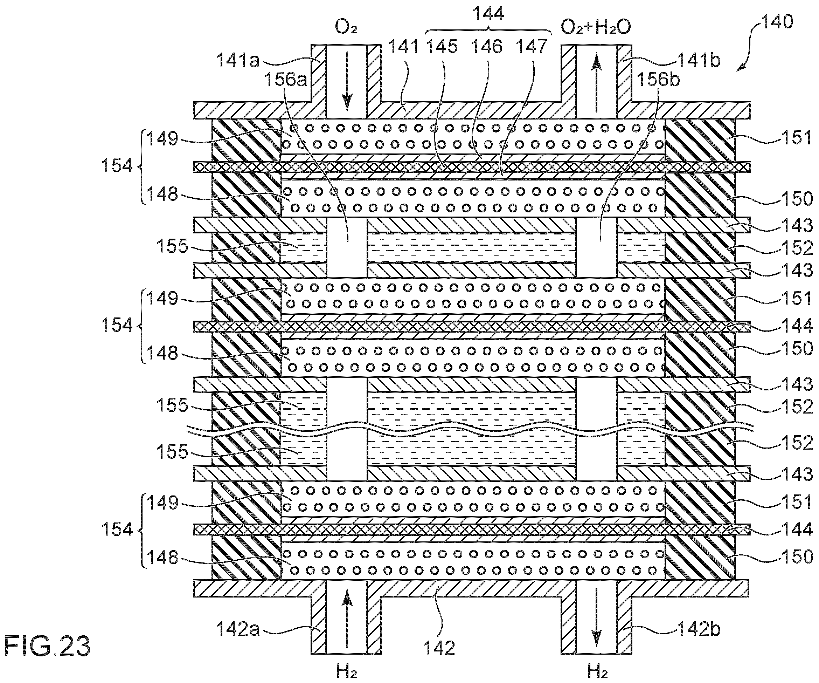

Next, description will be made on another installation object for the gasket device or the gasket according to the present invention. The gasket device or the gasket according to the present invention is also usable in, for example, a fuel battery. Fig. 23 is a cross-sectional view illustrating a schematic configuration of a fuel battery 140 in which the gasket device according to the present invention is used. As illustrated in Fig. 23, the fuel battery 140 includes end walls 141, 142, a plurality of separators 143, a plurality of polymer electrolyte membrane layers 144, a plurality of gas diffusion layers 148, a plurality of gas diffusion layers 149, and a plurality of gaskets 150, 151, 152. The fuel battery 140 is a polymer electrolyte fuel battery.

The end walls 141, 142 are flat metal plates disposed in parallel with each other. Incidentally, the end walls 141, 142 are formed with fine recessed portions (not illustrated) serving as gas flow paths. The end wall 141 is provided with a tubular path 141a for introducing atmospheric air containing oxygen into the fuel battery 140 and a tubular path 141b for deriving atmospheric air containing an oxygen gas and moisture from the fuel battery 140. The end wall 142 is provided with a tubular path 142a for introducing a hydrogen gas into the fuel battery 140 and a tubular path 142b for deriving a hydrogen gas from the fuel battery 140.

The plurality of separators 143 are disposed between the end walls 141, 142. The separators 143 are flat metal plates and disposed in parallel with each other. Although the separator 143 is also the flat metal plates, the separators 143 are also provided with fine recessed portions (not illustrated) serving as gas flow paths.

A single reaction cell 154, in which a chemical reaction between a hydrogen gas and an oxygen gas is to be caused, is formed between the end wall 141 and the separator 143 adjacent to the end wall 141. The polymer electrolyte membrane layer 144 is disposed between the end wall 141 and the separator 143 adjacent to the end wall 141. The polymer electrolyte membrane layer 144 includes a polymer electrolyte membrane (a polymer electrolyte membrane) 145 and an oxygen electrode membrane 146 and a hydrogen electrode membrane 147, which are stuck to respective opposite surfaces of the polymer electrolyte membrane 145. The polymer electrolyte membrane layer 144 is thus a CCM (catalyst coated membrane). The oxygen electrode membrane 146 and the hydrogen electrode membrane 147 are porous and the oxygen electrode membrane 146 and the hydrogen electrode membrane 147 are coated with a catalyst that accelerates a reaction. The catalyst contains, for example, platinum. The catalyst coating the oxygen electrode membrane 146 may be different from the catalyst coating the hydrogen electrode membrane 147.

Within the hydrogen gas introduced through the tubular path 142a, H⁺ passes through the polymer electrolyte membrane layer 144 from the hydrogen electrode membrane 147 toward the oxygen electrode membrane 146, reacting with the oxygen gas introduced through the tubular path 141a to generate pure water. An electric energy generated at this time can be taken out of the hydrogen electrode membrane 147 and the oxygen electrode membrane 146. The generated pure water and extra oxygen not having reacted with H⁺ are to be discharged through the tubular path 141b. Moreover, extra hydrogen not having reacted with oxygen is to be discharged through the tubular path 142b.

The single reaction cell 154 is also formed between adjacent two of the separators 143. The polymer electrolyte membrane layer 144 is also disposed between the adjacent two of the separators 143.

The single reaction cell 154 is also formed between the end wall 142 and the separator 143 adjacent to the end wall 142. The polymer electrolyte membrane layer 144 is also disposed between the end wall 142 and the separator 143 adjacent to the end wall 142.

As such, the separators 143 function as partitions partitioning the reaction cells 154. The end walls 141, 142, which also partition the reaction cells 154, can also be referred to as separator. Adjacent ones of the reaction cells 154 are connected through tubes 156a, 156b.

The gas diffusion layer 148 is disposed between the hydrogen electrode membrane 147 and the separator 143 and the gas diffusion layer 149 is disposed between the oxygen electrode membrane 146 and the separator 143. The gas diffusion layers 148, 149 are made of a porous material, for example, non-woven fabric.

Incidentally, a coolant layer 155 is provided between adj acent two of the reaction cells 154. A coolant flows inside the coolant layer 155, cooling the reaction cells 154 in which heat is generated by the chemical reaction. Each of the coolant layers 155 is sandwiched between adjacent two of the separators 143.

An elastomeric gasket 151 is sandwiched between the end wall (the separator) 141 and the polymer electrolyte membrane layer 144 adjacent to the end wall 141. The gasket 151 surrounds the entire circumference of the gas diffusion layer 149. The gasket 151 is compressed by the end wall 141 and the polymer electrolyte membrane layer 144.

An elastomeric gasket 150 is sandwiched between the separator 143 and the polymer electrolyte membrane layer 144 above adjacent to the separator 143 in the figure. The gasket 150 surrounds the entire circumference of the gas diffusion layer 148. The gasket 150 is compressed by the separator 143 and the polymer electrolyte membrane layer 144.

An elastomeric gasket 151 is sandwiched between the separator 143 and the polymer electrolyte membrane layer 144 below adjacent to the separator 143 in the figure. The gasket 151 surrounds the entire circumference of the gas diffusion layer 149. The gasket 151 is compressed by the separator 143 and the polymer electrolyte membrane layer 144.

An elastomeric gasket 150 is sandwiched between the end wall (the separator) 142 and the polymer electrolyte membrane layer 144 adjacent to the end wall 142. The gasket 150 surrounds the entire circumference of the gas diffusion layer 148. The gasket 150 is compressed between the end wall 142 and the polymer electrolyte membrane layer 144.

In Fig. 23, only the polymer electrolyte membrane 145 of the polymer electrolyte membrane layer 144 is brought into contact with the gaskets 150, 151. However, the polymer electrolyte membrane 145, the oxygen electrode membrane 146, and the hydrogen electrode membrane 147 of the polymer electrolyte membrane layer 144 may be brought into contact with the gaskets 150, 151.

An elastomeric gasket 152 is sandwiched between adjacent two of the separators 143. The gasket 152 surrounds the entire circumference of the coolant layer 155. The gasket 152 is compressed between the adjacent two of the separators 143.

The fuel battery 140 in Fig. 23 is integrated by a clamping device or a bolt and a nut so that the individual elements are not separated.

An up-down direction in Fig. 23 does not necessarily correspond to a use state of the fuel battery 140. The fuel battery 140 may be used with the end walls 141, 142, the separators 143, and the polymer electrolyte membrane layers 144 being in an upright state.

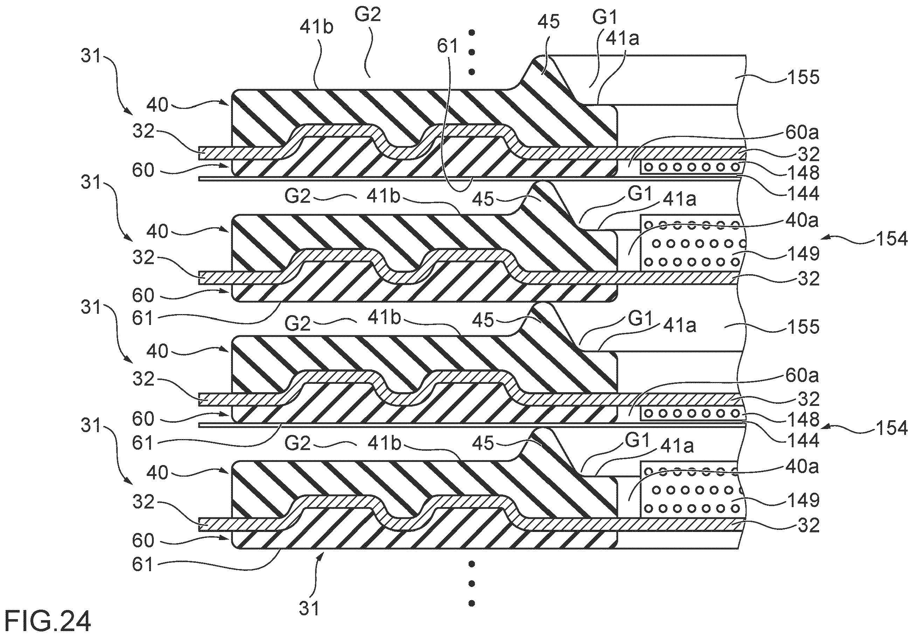

Fig. 24 is a cross-sectional view illustrating a state in which a plurality of gasket devices according to the second embodiment of the present invention are arranged side by side. Here, the above-described gasket device 31 is used. Although the lip 45 of the gasket 40 is compressed in the compressing direction during the use of the gasket device 31, Fig. 24 illustrates a state in which the gaskets 40, 60 are not compressed.

The gasket 150 surrounding the gas diffusion layer 148 in Fig. 23 corresponds to the second gasket 60. The gasket 151 surrounding the gas diffusion layer 149 corresponds to the first gasket 40. The gasket 152 surrounding the coolant layer 155 corresponds to the second gasket 60 of one of the gasket devices 31 and the first gasket 40 of another gasket device 31 being adjacently in contact therewith. In other words, the gasket 152 is a combination of the second gasket 60 and the first gasket 40. An upper side and a lower side in Fig. 24 are opposite to an upper side and a lower side in Fig. 23.

The separator 32 corresponds to any one of the above-described end walls 141, 142 and the separator 143. Although the gasket 151 is provided only on one surface of the end wall 141 in Fig. 23, the gaskets may be fixed to opposite surfaces of the end wall 141 (the separator 32). Moreover, although the gasket 151 is provided only on one surface of the end wall 142 in Fig. 23, the gaskets may be fixed to opposite surfaces of the end wall 142 (the separator 32).

As illustrated in Fig. 24, the plurality of gasket devices 31 are arranged side by side, the polymer electrolyte membrane layer 144 is interposed between specific two of the gasket devices 31, the gas diffusion layer 149 is disposed in the space surrounded by the opening 40a of the first gasket 40, and the gas diffusion layer 148 is disposed in the space surrounded by the opening 60a of the second gasket 60. Incidentally, since the coolant layer 155 is provided between the reaction cells 154, no polymer electrolyte membrane layer 144 is provided between adjacent ones of the reaction cells 154, causing the first gasket 40 to be in direct contact with the second gasket 60 between the adjacent ones of the reaction cells 154.

Moreover, positions of the plurality of gasket devices 31 are aligned and, in particular, a position of the lip 45 of each of the gasket devices 31 is aligned with a position of the lip 45 of another gasket device 31. The plurality of gasket devices 31 are arranged side by side in this manner, in which the polymer electrolyte membrane layer 144 is sandwiched between the gaskets 40, 60 between the specific two of the gasket devices 31, while the gaskets 40, 60 of specific two of the gasket devices 31 are caused to be in direct contact, whereby the components of the fuel battery 140 are disposed.

The plurality of gasket devices 31 are arranged side by side in the same orientation in the example in Fig. 24. In other words, in any of the gasket devices 31, the first gasket 40 is disposed on an end wall 142 side (see Fig. 23) and the second gasket 60 is disposed on an end wall 141 side.

In the reaction cell 154, the polymer electrolyte membrane layer 144 is sandwiched between the lip 45 of the first gasket 40 and the first side surface 61 of the second gasket 60 of adjacent two of the gasket devices 31. The first side surface 61 is brought into surface contact with the polymer electrolyte membrane layer 144.

The lip 45 of the first gasket 40 of adjacent two of the gasket devices 31 around the coolant layer 155 is brought into direct contact with the first side surface 61 of the second gasket 60.

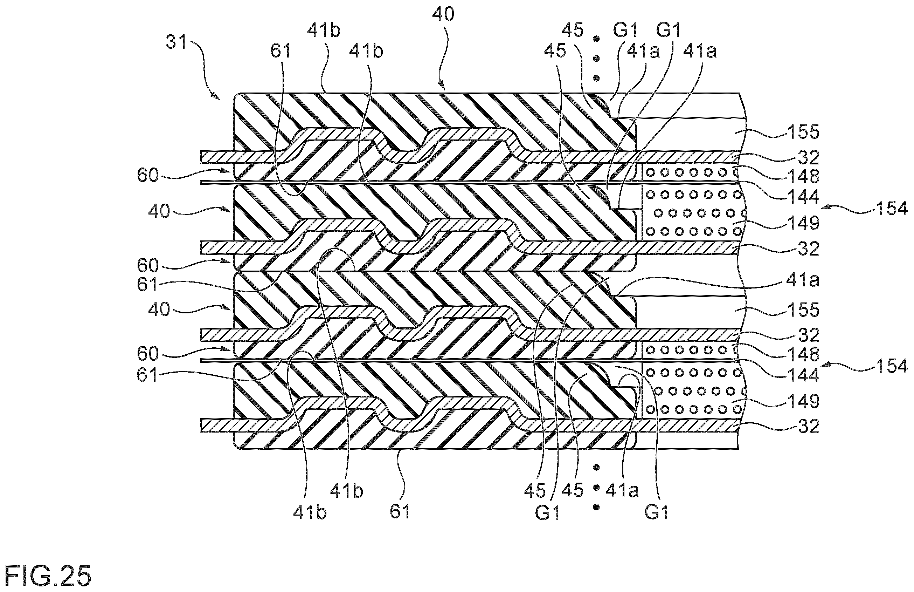

Next, the components of the fuel battery 140 formed as illustrated in Fig. 24 are compressed in the stacking direction (the compressing direction of the gasket device 31) with a member such as a bolt for integrating the fuel battery 140. The lip 45 of the first gasket 40 is thus compressed between the separator 32 and the polymer electrolyte membrane layer 144, gradually changing its shape. As illustrated in Fig. 25, the lip 45 is compressed until the polymer electrolyte membrane layer 144 comes into contact with the outer surface 41b of the gasket 40, whereby the fuel battery 140 is assembled and the gasket device 31 is put into the use state. As such, in the use state of the gasket device 31, the lip 45 is compressed until the polymer electrolyte membrane layer 144 comes into contact with the outer surface 41b. Meanwhile, in the use state, the second gasket 60 is compressed between the separator 32 and the polymer electrolyte membrane layer 144 and the whole of the first side surface 61 is pressed against the polymer electrolyte membrane layer 144.

In the use state, the gasket device 31 in the fuel battery 140 works as the gasket device 31 in the above-described water electrolysis device 2, sealing the space in which the gas diffusion layers 148, 149 are disposed and the coolant layer 155. Moreover, in the fuel battery 140, the gasket device 31 also produces the self-seal function as the gasket device 31 in the above-described water electrolysis device 2. As such, the gasket device 31 thus also enables an improvement in seal performance in the fuel battery 140.

As described above, the gasket device 31 according to the modification example of the first embodiment of the present invention is capable of exhibiting a high sealing function even though the pressure in the inner space of the fuel battery 140 is increased.

It should be noted that the plurality of gasket devices 31 are arranged side by side in the same orientation in the example illustrated in Figs. 13 and 14. In other words, in any of the gasket devices 31, the first gasket 40 is disposed on a cathode side, surrounding the cathode current collector 18, whereas the second gasket 60 is disposed on an anode side, surrounding the anode current collector 17. However, the first gasket 40 may be disposed on the anode side, surrounding the anode current collector 17, whereas the second gasket 60 may be disposed on the cathode side, surrounding the cathode current collector 18. Moreover, the plurality of gasket devices 31 may be arranged side by side in different orientations.

It should be noted that the plurality of gasket devices 31 are arranged side by side in the same orientation in the example illustrated in Figs. 24 and 25. In other words, in any of the gasket devices 31, the first gasket 40 is disposed on the end wall 142 side (see Fig. 23) and the second gasket 60 is disposed on the end wall 141 side. However, in the fuel battery 140, the orientation of the gasket devices 31 may be inversed and the first gasket 40 may be disposed on the end wall 141 side and the second gasket 60 may be disposed on the end wall 142 side. In this case, the first gasket 40 surrounds the gas diffusion layer 148 and the second gasket 60 surrounds the gas diffusion layer 149 or the coolant layer 155. Moreover, the plurality of gasket devices 31 may be arranged side by side in such a manner that mutually adjacent two of the gasket devices 31 are in different orientations.

As for the fuel battery 140, description is made on the case where the gasket device 31 is used; however, a gasket device used in the fuel battery 140 is not limited to the gasket device 31. A gasket device in another form may be used in the fuel battery 140. In other words, the gasket devices 30, 35, 38 may be used in the fuel battery 140 as the above-described gasket device 31.

The present invention is described through the above-described embodiments hereinabove but the technical scope of the present invention is not limited to the scope according to the above-described embodiments. It is obvious to those skilled in the art that a variety of modifications or improvements may be added to the above-described embodiments. It is obvious from the recitation in claims that a mode added with such a modification or an improvement is also within the technical scope of the present invention.

The embodiments described above are intended to facilitate the understanding of the present invention but not intended for a limited interruption of the present invention. Furthermore, the above-described embodiments are not intended to limit the objects to which the present invention is applicable and the present invention may be applied to any object. The components of the above-described embodiments and the locations, materials, conditions, shapes, sizes, and the like thereof are not limited to those described by way of example and may be modified, if necessary. For example, the present invention encompasses a difference generated in implementation, such as a manufacturing tolerance. Moreover, within the scope of technical consistency, the components described in the different embodiments may be partially replaced or combined. Moreover, the individual components may be selectively combined, if necessary, to achieve at least some of the problems to be solved and the effects described above.

For example, the gasket devices 30, 31 do not have to include the raised portions 33, 34, the grooves 46, 47, and the raised portions 56, 57 and the first gasket 40 and the separator 32 may be bonded with an adhesive and the second gaskets 50, 60 and the separator 32 may be bonded with an adhesive.

The shapes of the lips 45, 55 of the gaskets 40, 50, 70, 75 are not limited to almost a triangular shape with a curved distal end as illustrated and may be any other shape.

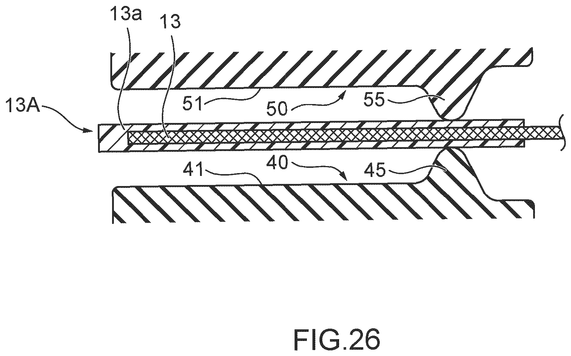

Moreover, a polymer electrolyte membrane layer 13A illustrated in Fig. 26 may be used in place of the polymer electrolyte membrane layer 13 of the water electrolysis device 2. The polymer electrolyte membrane layer 13A includes the above-described polymer electrolyte membrane layer 13 and a reinforcing frame 13a attached to a peripheral portion of the polymer electrolyte membrane layer 13 to cover opposite surfaces of the peripheral portion of the polymer electrolyte membrane layer 13. The reinforcing frame 13a, which is made of a resin film, reinforces the weak polymer electrolyte membrane layer 13 to facilitate the handling of the polymer electrolyte membrane layer 13. A material of the reinforcing frame13a is, for example, polyethylene terephthalate (PEN). The peripheral portion of the polymer electrolyte membrane layer 13, to which the reinforcing frame 13a is attached, may consist of the polymer electrolyte membrane 14 (see Fig. 2) or may include the polymer electrolyte membrane 14 and the catalytic membrane 15 and/or the catalytic membrane 16.

In this case, the first gasket 40 and the second gasket 50 may be brought into contact with the reinforcing frame on the opposite surfaces of the polymer electrolyte membrane layer 13A as illustrated in Fig. 26. Although Fig. 26 illustrates the use of the polymer electrolyte membrane layer 13A in the example in Fig. 7, the polymer electrolyte membrane layer 13A may be used in another example.

Although it is not illustrated, a peripheral portion of the polymer electrolyte membrane layer 144 used in the second embodiment may be attached with a reinforcing frame covering opposite surfaces of the polymer electrolyte membrane layer 144 to reinforce the weak polymer electrolyte membrane layer 144. In this case, the gasket of the present embodiment may be brought into contact with the reinforcing frame. The peripheral portion of the polymer electrolyte membrane layer 144, which is attached with the reinforcing frame, may consist of the polymer electrolyte membrane 145 (see Fig. 23) and may include the polymer electrolyte membrane 145 and the oxygen electrode membrane 146 and/or the hydrogen electrode membrane 147.

### [Reference Signs List]

1 rectifier, 2 water electrolysis device, 3 pure production device, 4 pure water storage tank, 5 oxygen separator, 6 hydrogen separator, 7 hydrogen dryer, 8 hydrogen storage cylinder, 10, 11 end wall, 10a, 11a, 11b tubular path, 12 separator, 12a, 12b through hole, 13, 13A polymer electrolyte membrane layer, 13a reinforcing frame, 14 polymer electrolyte membrane, 15, 16 catalyst, 17 anode current collector, 18 cathode current collector, 19, 20 gasket, 21 electrolysis cell, 30, 31, 35, 38 gasket device, 32, 36, 39 separator, 32a, 32b, 36a, 36b, 39a, 39b surface, 33, 34 raised portion, 33a, 34a raised surface, 33b, 34b recessed surface, 33c, 34c recessed portion, 33d, 34d raised portion, 37 stepped portion, 37a inner portion, 37b outer end portion, 37c side wall portion, 39a1 projecting surface portion, 39a2 flat surface portion, 39a3 recessed portion, 39c groove, 39d bottom surface, 39e inner wall surface, 39f outer wall surface, 40 first gasket, 40a opening, 41 first side surface, 41a inner surface, 41b outer surface, 42 second side surface, 42a, 42b, 42c contact surface, 43 inner end surface, 44 outer end surface, 45 lip, 45a inner inclined surface, 45b outer inclined surface, 45c distal end surface, 45d distal end, 46, 47 groove, 46a, 47a protrusion, 50, 60 second gasket, 50a opening, 51, 61 first side surface, 51a inner surface, 51b outer surface, 52 second side surface, 52a, 52b, 52c contact surface, 53 inner end surface, 54 outer end surface, 55 lip, 55a inner inclined surface, 55b outer inclined surface, 55c distal end surface, 55d distal end, 56, 57 raised portion, 56a, 57a recessed portion, 70, 75 gasket, 70a opening, 71 first side surface, 71a inner surface, 71b outer surface, 71c recessed surface, portion, 71d flat surface portion, 72 second side surface, 73 inner end surface, 74, 76 outer end surface, 140 fuel battery, 141, 142 end wall 141a, 141b, 142a, 142b tubular path, 143 separator, 144 polymer electrolyte membrane layer, 146 oxygen electrode membrane, 147 hydrogen electrode membrane, 148, 149 gas diffusion layer, 150, 151, 152 gasket, 154 reaction cell, 155 coolant layer, 156a, 156b tubular path, G1, G2, G3, G4 gap, h1, h11 inner height, h2, h12 outer height, P1, P2 reference plane, S1 cathode space, S2 anode space, t1, t2, t11, t12 height, w1, w11 inner width, w2, w12 outer width

## Claims

1. A gasket for sealing a space between opposed members in a water electrolysis device or a fuel battery, the gasket being made of an elastic body, the gasket being in an annular shape, the gasket being configured to be attached to one of a pair of surfaces of a separator in such a manner as to surround the space, the pair of surfaces facing away from each other, the gasket comprising an annularly extending lip, wherein
the lip is configured to project in a direction that the one of the pair of surfaces of the separator faces, and
the lip has different heights on a side of the space and an opposite side to the side of the space.

2. The gasket according to claim 1, wherein
the height of the lip on the side of the space is higher than the height of the lip on the opposite side to the space.

3. The gasket according to claim 1 or 2, wherein
the gasket has an inner surface that is an annular surface connected to the lip on the side of the space and an outer surface that is an annular surface connected to the lip on the opposite side to the space,
the height of the lip on the side of the space is a distance in a direction for the lip to project between a distal end of the lip and the inner surface, and
the height of the lip on the opposite side to the space is a distance in the direction for the lip to project between the distal end of the lip and the outer surface.

4. The gasket according to claim 3, wherein
the inner surface and the outer surface are configured to extend along the one of the pair of surfaces of the separator.

5. The gasket according to claim 1, comprising
a single annular recessed portion or a plurality of annular recessed portions configured to receive a single annularly extending raised portion or a plurality of respective annularly extending raised portions formed on the pair of surfaces of the separator.

6. The gasket according to claim 1, comprising
a single annular raised portion or a plurality of annular raised portions configured to be received in a single annularly extending recessed portion or a plurality of respective annularly extending recessed portions formed on the pair of surfaces of the separator.

7. A gasket device for sealing a space between opposed members in a water electrolysis device or a fuel battery, the gasket device comprising:
a gasket made of an elastic body; and
a separator having a pair of surfaces facing away from each other, wherein
the gasket is in an annular shape and attached to one of the pair of surfaces of the separator in such a manner as to surround the space and includes an annularly extending lip projecting in a direction that the one of the pair of surfaces of the separator faces, and
the lip has different heights on a side of the space and an opposite side to the side of the space.

8. A gasket device according to claim 7, wherein
the height of the lip on the side of the space is higher than the height of the lip on the opposite side to the space.

9. A gasket device according to claim 7 or 8, wherein
the gasket has an inner surface that is an annular surface connected to the lip on the side of the space and an outer surface that is an annular surface connected to the lip on the opposite side to the space,
the height of the lip on the side of the space is a distance in a direction for the lip to project between a distal end of the lip and the inner surface, and
the height of the lip on the opposite side to the space is a distance in the direction for the lip to project between the distal end of the lip and the outer surface.

10. The gasket device according to claim 9, wherein
the inner surface and the outer surface extend along the one of the pair of surfaces of the separator.

11. The gasket device according to claim 7, wherein
the separator includes at least one annularly extending recessed portion,
the recessed portion is formed in the one or another one of the pair of surfaces, and
the gasket is attached to a portion of the separator, the portion including the recessed portion.

12. The gasket device according to claim 7, comprising
another gasket made of an elastic body, wherein
the other gasket is in an annular shape and is attached to another one of the pair of surfaces of the separator to face away from the gasket in such a manner as to surround the space.

13. The gasket device according to claim 12, wherein
the other gasket includes an annularly extending lip projecting in a direction that the other one of the pair of surfaces of the separator faces, and
the lip of the other gasket has different heights on the side of the space and the opposite side to the side of the space.

14. The gasket device according to claim 13, wherein
the height of the lip of the other gasket on the side of the space is higher than the height of the lip of the other gasket on the opposite side to the space.

15. The gasket device according to claim 13 or 14, wherein
the other gasket has an inner surface that is an annular surface connected to the lip of the other gasket on the side of the space and an outer surface that is an annular surface connected to the lip of the other gasket on the opposite side to the space,
the height of the lip of the other gasket on the side of the space is a distance in a direction for the lip of the other gasket to project between a distal end of the lip of the other gasket and the inner surface of the other gasket, and
the height of the lip of the other gasket on the opposite side to the space is a distance in the direction for the lip of the other gasket to project between the distal end of the lip of the other gasket and the outer surface of the other gasket.

16. The gasket device according to claim 15, wherein
the inner surface of the other gasket and the outer surface of the other gasket extend along the other one of the pair of surfaces of the separator.

17. The gasket device according to claim 12, wherein
the other gasket has a surface annularly extending along the other one of the pair of surfaces of the separator.

18. The gasket device according to claim 7, wherein
the separator includes a stepped portion forming a step on a side that the one of the pair of surfaces faces,
the stepped portion annularly extends, and
the gasket is in contact with the step at a portion opposite to the space with respect to the lip.

19. The gasket device according to claim 7, wherein
the separator has an annular groove recessed toward another one of the pair of surfaces, and
the gasket is provided within the groove.
